(19) 

Europäisches
Patentamt

European
Patent Office

Office européen
des brevets

(11) **EP 4 148 937 A1**

(12) **EUROPEAN PATENT APPLICATION**
published in accordance with Art. 153(4) EPC

(43) Date of publication:
**15.03.2023 Bulletin 2023/11**

(21) Application number: **20945139.2**

(22) Date of filing: **13.07.2020**

(51) International Patent Classification (IPC):
**H02J 3/16** *(2006.01)*

(52) Cooperative Patent Classification (CPC):
**H02J 3/16;** Y02E 40/30

(86) International application number:
**PCT/CN2020/101741**

(87) International publication number:
**WO 2022/011521 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Digital Power Technologies
Co., Ltd.
Shenzhen, Guangdong 518043 (CN)**

(72) Inventors:
• **LI, Junjie
  Shenzhen, Guangdong 518129 (CN)**
• **XIN, Kai
  Shenzhen, Guangdong 518129 (CN)**
• **YU, Xinyu
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **REACTIVE CURRENT CONTROL METHOD AND APPARATUS FOR INVERTER**

(57)    This application relates to a method and an apparatus for controlling a reactive current of an inverter. According to the method and the apparatus, an overvoltage control reactive current instruction is generated based on a port voltage of an inverter and an overvoltage control reference voltage; an undervoltage control reactive current instruction is generated based on the port voltage and an undervoltage control reference voltage; a third loop control reactive current instruction is determined based on a working status of the inverter; a comparison result of the overvoltage control reactive current instruction, the undervoltage control reactive current instruction, and the third loop control reactive current instruction is determined; and loop control corresponding to the comparison result is selected. Therefore, a reactive current is adaptively adjusted based on the port voltage, and flexible smooth switching between the overvoltage loop control, the undervoltage loop control, and the third loop control is also implemented, thereby helping avoid a plurality of times of fault ride through triggered by the inverter and disconnection caused by a ride through failure in a weak grid or an extremely weak grid.

FIG. 1

EP 4 148 937 A1

**Description**

**TECHNICAL FIELD**

This application relates to the field of power electronics technologies, and specifically, to a method and an apparatus for controlling a reactive current of an inverter.

**BACKGROUND**

New energy technologies, such as photovoltaic power generation and wind power generation, have been rapidly developed with the increasing depletion of conventional energy, such as oil and natural gas. The photovoltaic power generation is converting solar radiation energy into electric energy by using a photovoltaic effect of a semiconductor material, for example, generating a direct current under illumination by using a photovoltaic module. A photovoltaic power generation system and a wind turbine are usually direct current voltage sources, where a generated direct current is converted into an alternating current by using an inverter and then the alternating current is transmitted to a grid for transmission. An alternating current output by a grid-tied inverter (Grid-Tied Inverter, IGT) needs to be synchronized with utility power in a grid in terms of frequency and phase, to be transmitted by using the grid.

As a grid-tied capacity of a power generation system based on a new energy technology continuously expands, access and installation capacities of a large quantity of new power generation devices increase, and a system short-circuit ratio (Short-Circuit Ratio, SCR), representing a system short-circuit capacity divided by a device capacity, of a grid-tied point, becomes increasingly low. A lower SCR means a weaker grid, posing a great challenge to grid stability. In addition, a newly-built photovoltaic power generation system and wind turbine are usually located in a place far away from a power load center, and therefore need to transmit electric energy over a long distance, also posing a challenge to grid maintenance performed after a disconnection fault occurs in these power generation systems. Usually, an alternating current grid whose SCR is less than 3 can be considered as a weak grid, and an alternating current grid whose SCR is less than 2 can be considered as an extremely weak grid. For the weak grid and the extremely weak grid, relatively weak contact exists between the grid and a power generation system, and is characterized by a relatively low system short-circuit capacity and a relatively high grid impedance. Therefore, when a grid-tied voltage obviously changes due to a fault or disturbance, frequent switching between high voltage ride through and low voltage ride through may be caused, and a fault ride through failure may be caused. Consequently, a grid-tied inverter has to be disconnected from the grid, increasing partial-grid fault recovery difficulty and impairing grid stability.

To maintain safe and stable grid operation, reduce grid maintenance difficulty, and reduce a quantity of times of repeated grid tying in case of a power system fault, a new energy power generation system needs to have a specific fault ride through capability. The fault ride through indicates that when an output alternating current voltage exceeds a normal operation range due to a fault or disturbance, a power generation system can ensure continuous operation without disconnection within a specified change range and time interval. The fault ride through may be classified into low voltage ride through (Low Voltage Ride Through, LVRT) and high voltage ride through (High Voltage Ride Through, HVRT). The LVRT indicates that when a port voltage (a voltage of a common connection point between an output port of a direct current to alternating current conversion apparatus and a transmission line or a transformer of a grid) of an alternating current output end of a power generation system is decreased to a specific value, the power generation system can maintain operation without being disconnected from the grid, and even provide specific reactive power to help the system recover. The HVRT indicates that when a port voltage of an alternating current output end of a power generation system is increased to a specific value, the power generation system can maintain operation without being disconnected from the grid, and even provide specific reactive power to help the system recover.

For an inverter in the conventional technology, in particular, a grid-tied inverter tied to a grid, after grid fault recovery, active power is recovered, according to a fixed gradient, to active power existing before a fault occurs, and reactive power is recovered in two manners: In one manner, the reactive power is first cleared, and then reactive power existing before the fault occurs is directly output. In this way, there is a relatively large step change in reactive power output after the grid fault recovery. In the other manner, the reactive power is first cleared, and then the reactive power is recovered, according to a preset fixed gradient, to the reactive power existing before the fault occurs. In this way, reactive power output can only be monotonically increased or monotonically decreased according to the preset fixed gradient after the grid fault recovery. Therefore, for an inverter in the conventional technology, in particular, a grid-tied inverter used in a weak grid or an extremely weak grid, active power and reactive power that are output after fault recovery do not match. Consequently, there is a relatively large fluctuation in a port voltage, causing repeated oscillation of high voltage ride through or low voltage ride through, or disconnection occurring after a fault ride through failure.

## SUMMARY

This application aims to provide a method and an apparatus for controlling a reactive current of an inverter, and a specific application scenario includes but is not limited to a new energy power generation system, such as a photovoltaic power generation system, connected to a weak grid or an extremely weak grid. According to the method and the apparatus for controlling a reactive current of an inverter, an overvoltage control reactive current instruction is generated based on a port voltage of an inverter and an overvoltage control reference voltage; an undervoltage control reactive current instruction is generated based on the port voltage and an undervoltage control reference voltage; a third loop control reactive current instruction is determined based on a working status of the inverter; a comparison result of the overvoltage control reactive current instruction, the undervoltage control reactive current instruction, and the third loop control reactive current instruction is determined; and loop control corresponding to the comparison result is selected. Therefore, a reactive current is adaptively adjusted based on the port voltage, and flexible smooth switching between the overvoltage loop control, the undervoltage loop control, and the third loop control is also implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to a first aspect, an embodiment of this application provides a method for controlling a reactive current of an inverter. The method for controlling a reactive current of an inverter includes: generating an overvoltage control reactive current instruction for overvoltage loop control based on a port voltage of an inverter and an overvoltage control reference voltage, where the overvoltage loop control is marked as first loop control, and the overvoltage loop control is controlling an output reactive current of the inverter according to the overvoltage control reactive current instruction, so that an absolute value of a difference between the port voltage and the overvoltage control reference voltage is less than a first threshold; generating an undervoltage control reactive current instruction for undervoltage loop control based on the port voltage and an undervoltage control reference voltage, where the undervoltage loop control is marked as second loop control, and the undervoltage loop control is controlling the output reactive current of the inverter according to the undervoltage control reactive current instruction, so that an absolute value of a difference between the port voltage and the undervoltage control reference voltage is less than a second threshold; determining a third loop control reactive current instruction for third loop control based on a working status of the inverter, where the third loop control is independent of the first loop control and the second loop control, and the working status includes a fault ride through state, a fault recovery state, or a normal state; determining a comparison result of the overvoltage control reactive current instruction, the undervoltage control reactive current instruction, and the third loop control reactive current instruction; and selecting the first loop control, the second loop control, or the third loop control corresponding to the comparison result.

According to the technical solution described in the first aspect, the overvoltage control reactive current instruction is generated based on the port voltage of the inverter and the overvoltage control reference voltage; the undervoltage control reactive current instruction is generated based on the port voltage and the undervoltage control reference voltage; the third loop control reactive current instruction is determined based on the working status of the inverter; the comparison result of the overvoltage control reactive current instruction, the undervoltage control reactive current instruction, and the third loop control reactive current instruction is determined; and loop control corresponding to the comparison result is selected. Therefore, a reactive current is adaptively adjusted based on the port voltage, and flexible smooth switching between the overvoltage loop control, the undervoltage loop control, and the third loop control is also implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the first aspect, in a possible implementation, when the working status is the fault ride through state, the third loop control reactive current instruction is a fault ride through reactive current instruction; when the working status is the fault recovery state, the third loop control reactive current instruction is a fault recovery reactive current instruction; or when the working status is the normal state, the third loop control reactive current instruction is a power scheduling reactive current instruction.

This facilitates flexible control for different control targets and different grid environments.

According to the first aspect, in a possible implementation, the third loop control reactive current instruction is preset or determined based on an instruction received from a host computer relative to the inverter.

This facilitates flexible control for different control targets and different grid environments.

According to the first aspect, in a possible implementation, the working status is determined based on the port voltage or an instruction of the host computer relative to the inverter.

This facilitates flexible control for different control targets and different grid environments.

According to the first aspect, in a possible implementation, the determining a comparison result of the overvoltage control reactive current instruction, the undervoltage control reactive current instruction, and the third loop control reactive current instruction includes: determining that an output current direction of the inverter is a positive reference direction; determining a minimum result in the undervoltage control reactive current instruction and the third loop control reactive current instruction based on the positive reference direction; and determining a maximum result in the minimum result and the overvoltage control reactive current instruction based on the positive reference direction, where the maximum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining a comparison result of the overvoltage control reactive current instruction, the undervoltage control reactive current instruction, and the third loop control reactive current instruction includes: determining that an output current direction of the inverter is a positive reference direction; determining a first maximum result in the undervoltage control reactive current instruction and the overvoltage control reactive current instruction based on the positive reference direction; determining a second maximum result in the third loop control reactive current instruction and the overvoltage control reactive current instruction based on the positive reference direction; and determining a minimum result in the first maximum result and the second maximum result based on the positive reference direction, where the minimum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining a comparison result of the overvoltage control reactive current instruction, the undervoltage control reactive current instruction, and the third loop control reactive current instruction includes: determining that an output current direction of the inverter is a negative reference direction; determining a maximum result in the undervoltage control reactive current instruction and the third loop control reactive current instruction based on the negative reference direction; and determining a minimum result in the maximum result and the overvoltage control reactive current instruction based on the negative reference direction, where the minimum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining a comparison result of the overvoltage control reactive current instruction, the undervoltage control reactive current instruction, and the third loop control reactive current instruction includes: determining that an output current direction of the inverter is a negative reference direction; determining a first minimum result in the undervoltage control reactive current instruction and the overvoltage control reactive current instruction based on the negative reference direction; determining a second minimum result in the third loop control reactive current instruction and the overvoltage control reactive current instruction based on the negative reference direction; and determining a maximum result in the first minimum result and the second minimum result based on the negative reference direction, where the maximum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, when the overvoltage control reference voltage is equal to the undervoltage control reference voltage, the overvoltage loop control and the undervoltage loop control are same single loop control.

In this way, the overvoltage loop control and the undervoltage loop control are simplified as the same single loop control, so that a system structure and a control process are simplified, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining a comparison result of the overvoltage control reactive current instruction, the undervoltage control reactive current instruction, and the third loop control reactive current instruction includes: determining a first weight value corresponding to the first loop control, a second weight value corresponding to the second loop control, and a third weight value corresponding to the third loop control; calculating a weighted overvoltage control reactive current instruction based on the overvoltage control reactive current instruction and the first weight value; calculating a weighted undervoltage control reactive current instruction based on the undervoltage control reactive current instruction and the second weight value; calculating a weighted third loop control reactive current instruction based on the third loop control reactive current instruction and the third weight value; and determining the comparison result based on the weighted overvoltage control reactive current instruction, the weighted undervoltage control reactive current instruction, and the weighted third loop control reactive current instruction.

In this way, the corresponding weight values are introduced for weighted comparison, so that a specific type of loop control may be focused on based on a different control requirement, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the first weight value, the second weight value, and the third weight value are separately determined based on the working status of the inverter and a status of a grid to which the inverter is tied.

In this way, the weight values are determined based on the working status of the inverter and the status of the grid, so that a weighted comparison result can be adjusted based on an actual case, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the first weight value, the second weight value, and the third weight value respectively have independent time parameters, and the time parameters are determined based on duration of the working status.

In this way, the independent time parameters are set, so that the weight values can be flexibly adjusted based on the duration, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the method for controlling a reactive current of an inverter further includes: setting the overvoltage control reference voltage based on a status parameter of the inverter, where the status parameter includes an average port voltage value that is of the inverter and that is obtained before the fault ride through state, a rated voltage of the inverter, output power of the inverter, an overvoltage protection point of the inverter, a power system short-circuit ratio corresponding to the inverter, or an average reactive power value that is of the inverter and that is obtained before the fault ride through state.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the first aspect, in a possible implementation, the method for controlling a reactive current of an inverter further includes: setting the undervoltage control reference voltage based on a status parameter of the inverter, where the status parameter includes the average port voltage value that is of the inverter and that is obtained before the fault ride through state, the rated voltage of the inverter, the output power of the inverter, an undervoltage protection point of the inverter, the power system short-circuit ratio corresponding to the inverter, or the average reactive power value that is of the inverter and that is obtained before the fault ride through state.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the first aspect, in a possible implementation, the method for controlling a reactive current of an inverter further includes: determining the overvoltage control reference voltage based on the port voltage.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining the overvoltage control reference voltage based on the port voltage includes: determining an overvoltage loop control trigger threshold and an overvoltage loop control exit threshold based on a smaller value in a high voltage ride through trigger threshold and an overvoltage protection threshold of the inverter, where the overvoltage loop control exit threshold is not greater than the overvoltage loop control trigger threshold, the overvoltage loop control trigger threshold is not greater than the smaller value, the inverter triggers high voltage ride through when the port voltage is greater than the high voltage ride through trigger threshold, and the inverter triggers overvoltage disconnection protection when the port voltage is greater than the overvoltage protection threshold; and when the port voltage is greater than the overvoltage loop control trigger threshold, determining a first overvoltage reference voltage as the overvoltage control reference voltage; or when the port voltage is less than the overvoltage loop control exit threshold, determining a second overvoltage reference voltage as the overvoltage control reference voltage, where the first overvoltage reference voltage is not greater than the second overvoltage reference voltage, and the second overvoltage reference voltage is not greater than the overvoltage loop control exit threshold.

In this way, the overvoltage loop control trigger threshold and the overvoltage loop control exit threshold are determined with reference to the high voltage ride through trigger threshold and the overvoltage protection threshold, and the first overvoltage reference voltage and the second overvoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the method for controlling a reactive current of an inverter further includes: separately setting the overvoltage loop control trigger threshold and the overvoltage loop control exit threshold based on a status parameter of the inverter, where the status parameter includes the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

In this way, the overvoltage loop control trigger threshold and the overvoltage loop control exit threshold are separately set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the method for controlling a reactive current of an inverter further includes: determining the undervoltage control reference voltage based on the port voltage.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the determining the undervoltage control reference voltage based on the port voltage includes: determining an undervoltage loop control trigger threshold and an undervoltage loop control exit threshold based on a larger value in a low voltage ride through trigger threshold and an undervoltage protection threshold of the inverter, where the undervoltage loop control exit threshold is not less than the undervoltage loop control trigger threshold, the undervoltage loop control trigger threshold is not less than the larger value, the inverter triggers low voltage ride through when the port voltage is less than the low voltage ride through trigger threshold, and the inverter triggers undervoltage disconnection protection when the port voltage is less than the undervoltage protection threshold; and when the port voltage is less than the undervoltage loop control trigger threshold, determining a first undervoltage reference voltage as the undervoltage control reference voltage; or when the port voltage is greater than the undervoltage loop control exit threshold, determining a second undervoltage reference voltage as the undervoltage control reference voltage, where the first undervoltage reference voltage is not less than the second undervoltage reference voltage, and the second undervoltage reference voltage is not less than the undervoltage loop control exit threshold.

In this way, the undervoltage loop control trigger threshold and the undervoltage loop control exit threshold are determined with reference to the low voltage ride through trigger threshold and the undervoltage protection threshold, and the first undervoltage reference voltage and the second undervoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the method for controlling a reactive current of an inverter further includes: separately setting the undervoltage loop control trigger threshold and the undervoltage loop control exit threshold based on a status parameter of the inverter, where the status parameter includes the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

In this way, the undervoltage loop control trigger threshold and the undervoltage loop control exit threshold are separately set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the first aspect, in a possible implementation, the port voltage is obtained through real-time collection. In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to a second aspect, an embodiment of this application provides an apparatus for controlling a reactive current of an inverter. The apparatus for controlling a reactive current of an inverter includes a memory and a processor, the memory stores a computer program, and the processor performs the following operations according to the computer program: generating an overvoltage control reactive current instruction for overvoltage loop control based on a port voltage of an inverter and an overvoltage control reference voltage, where the overvoltage loop control is marked as first loop control, and the overvoltage loop control is controlling an output reactive current of the inverter according to the overvoltage control reactive current instruction, so that an absolute value of a difference between the port voltage and the overvoltage control reference voltage is less than a first threshold; generating an undervoltage control reactive current instruction for undervoltage loop control based on the port voltage and an undervoltage control reference voltage, where the undervoltage loop control is marked as second loop control, and the undervoltage loop control is controlling the output reactive current of the inverter according to the undervoltage control reactive current instruction, so that an absolute value of a difference between the port voltage and the undervoltage control reference voltage is less than a second threshold; determining a third loop control reactive current instruction for third loop control based on a working status of the inverter, where the third loop control is independent of the first loop control and the second loop control, and the working status includes a fault ride through state, a fault recovery state, or a normal state; determining a comparison result of the overvoltage control reactive current instruction, the undervoltage control reactive current instruction, and the third loop control reactive current instruction; and selecting the first loop control, the second loop control, or the third loop control corresponding to the comparison result.

According to the technical solution described in the second aspect, the overvoltage control reactive current instruction is generated based on the port voltage of the inverter and the overvoltage control reference voltage; the undervoltage control reactive current instruction is generated based on the port voltage and the undervoltage control reference voltage; the third loop control reactive current instruction is determined based on the working status of the inverter; the comparison result of the overvoltage control reactive current instruction, the undervoltage control reactive current instruction, and the third loop control reactive current instruction is determined; and loop control corresponding to the comparison result is selected. Therefore, a reactive current is adaptively adjusted based on the port voltage, and flexible smooth switching between the overvoltage loop control, the undervoltage loop control, and the third loop control is also implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the second aspect, in a possible implementation, when the working status is the fault ride through state, the third loop control reactive current instruction is a fault ride through reactive current instruction; when the working status is the fault recovery state, the third loop control reactive current instruction is a fault recovery reactive current instruction; or when the working status is the normal state, the third loop control reactive current instruction is a power scheduling reactive current instruction.

This facilitates flexible control for different control targets and different grid environments.

According to the second aspect, in a possible implementation, the third loop control reactive current instruction is preset or determined based on an instruction received from a host computer relative to the inverter.

This facilitates flexible control for different control targets and different grid environments.

According to the second aspect, in a possible implementation, the working status is determined based on the port voltage or an instruction of the host computer relative to the inverter.

This facilitates flexible control for different control targets and different grid environments.

According to the second aspect, in a possible implementation, the determining a comparison result of the overvoltage control reactive current instruction, the undervoltage control reactive current instruction, and the third loop control reactive current instruction includes: determining that an output current direction of the inverter is a positive reference direction; determining a minimum result in the undervoltage control reactive current instruction and the third loop control reactive current instruction based on the positive reference direction; and determining a maximum result in the minimum result and the overvoltage control reactive current instruction based on the positive reference direction, where the maximum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining a comparison result of the overvoltage control reactive current instruction, the undervoltage control reactive current instruction, and the third loop control reactive current instruction includes: determining that an output current direction of the inverter is a positive reference direction; determining a first maximum result in the undervoltage control reactive current instruction and the overvoltage control reactive current instruction based on the positive reference direction; determining a second maximum result in the third loop control reactive current instruction and the overvoltage control reactive current instruction based on the positive reference direction; and determining a minimum result in the first maximum result and the second maximum result based on the positive reference direction, where the minimum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining a comparison result of the overvoltage control reactive current instruction, the undervoltage control reactive current instruction, and the third loop control reactive current instruction includes: determining that an output current direction of the inverter is a negative reference direction; determining a maximum result in the undervoltage control reactive current instruction and the third loop control reactive current instruction based on the negative reference direction; and determining a minimum result in the maximum result and the overvoltage control reactive current instruction based on the negative reference direction, where the minimum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining a comparison result of the overvoltage control reactive current instruction, the undervoltage control reactive current instruction, and the third loop control reactive current instruction includes: determining that an output current direction of the inverter is a negative reference direction; determining a first minimum result in the undervoltage control reactive current instruction and the overvoltage control reactive current instruction based on the negative reference direction; determining a second minimum result in the third loop control reactive current instruction and the overvoltage control reactive current instruction based on the negative reference direction; and determining a maximum result in the first minimum result and the second minimum result based on the negative reference direction, where the maximum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, when the overvoltage control reference voltage is equal to the undervoltage control reference voltage, the overvoltage loop control and the undervoltage loop control are same single loop control.

In this way, the overvoltage loop control and the undervoltage loop control are simplified as the same single loop control, so that a system structure and a control process are simplified, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining a comparison result of the overvoltage control reactive current instruction, the undervoltage control reactive current instruction, and the third loop control reactive current instruction includes: determining a first weight value corresponding to the first loop control, a second weight value corresponding to the second loop control, and a third weight value corresponding to the third loop control; calculating a weighted overvoltage control reactive current instruction based on the overvoltage control reactive current instruction and the first weight value; calculating a weighted undervoltage control reactive current instruction based on the undervoltage control reactive current instruction and the second weight value; calculating a weighted third loop control reactive current instruction based on the third loop control reactive current instruction and the third weight value; and determining the comparison result based on the weighted overvoltage control reactive current instruction, the weighted undervoltage control reactive current instruction, and the weighted third loop control reactive current instruction.

In this way, the corresponding weight values are introduced for weighted comparison, so that a specific type of loop control may be focused on based on a different control requirement, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the first weight value, the second weight value, and the third weight value are separately determined based on the working status of the inverter and a status of a grid to which the inverter is tied.

In this way, the weight values are determined based on the working status of the inverter and the status of the grid, so that a weighted comparison result can be adjusted based on an actual case, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the first weight value, the second weight value, and the third weight value respectively have independent time parameters, and the time parameters are determined based on duration of the working status.

In this way, the independent time parameters are set, so that the weight values can be flexibly adjusted based on the duration, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the processor further performs the following operation: setting the overvoltage control reference voltage based on a status parameter of the inverter, where the status parameter includes an average port voltage value that is of the inverter and that is obtained before the fault ride through state, a rated voltage of the inverter, output power of the inverter, an overvoltage protection point of the inverter, a power system short-circuit ratio corresponding to the inverter, or an average reactive power value that is of the inverter and that is obtained before the fault ride through state.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the second aspect, in a possible implementation, the processor further performs the following operation: setting the undervoltage control reference voltage based on a status parameter of the inverter, where the status parameter includes the average port voltage value that is of the inverter and that is obtained before the fault ride through state, the rated voltage of the inverter, the output power of the inverter, an undervoltage protection point of the inverter, the power system short-circuit ratio corresponding to the inverter, or the average reactive power value that is of the inverter and that is obtained before the fault ride through state.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. According to the second aspect, in a possible implementation, the processor further performs the following operation: determining the overvoltage control reference voltage based on the port voltage.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining the overvoltage control reference voltage based on the port voltage includes: determining an overvoltage loop control trigger threshold and an overvoltage loop control exit threshold based on a smaller value in a high voltage ride through trigger threshold and an overvoltage protection threshold of the inverter, where the overvoltage loop control exit threshold is not greater than the overvoltage loop control trigger threshold, the overvoltage loop control trigger threshold is not greater than the smaller value, the inverter triggers high voltage ride through when the port voltage is greater than the high voltage ride through trigger threshold, and the inverter triggers overvoltage disconnection protection when the port voltage is greater than the overvoltage protection threshold; and when the port voltage is greater than the overvoltage loop control trigger threshold, determining a first overvoltage reference voltage as the overvoltage control reference voltage; or when the port voltage is less than the overvoltage loop control exit threshold, determining a second overvoltage reference voltage as the overvoltage control reference voltage, where the first overvoltage reference voltage is not greater than the second overvoltage reference voltage, and the second overvoltage reference voltage is not greater than the overvoltage loop control exit threshold.

In this way, the overvoltage loop control trigger threshold and the overvoltage loop control exit threshold are determined with reference to the high voltage ride through trigger threshold and the overvoltage protection threshold, and the first overvoltage reference voltage and the second overvoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the processor further performs the following operation: separately setting the overvoltage loop control trigger threshold and the overvoltage loop control exit threshold based on a status parameter of the inverter, where the status parameter includes the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

In this way, the overvoltage loop control trigger threshold and the overvoltage loop control exit threshold are separately set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the processor further performs the following operation: determining the undervoltage control reference voltage based on the port voltage.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the determining the undervoltage control reference voltage based on the port voltage includes: determining an undervoltage loop control trigger threshold and an undervoltage loop control exit threshold based on a larger value in a low voltage ride through trigger threshold and an undervoltage protection threshold of the inverter, where the undervoltage loop control exit threshold is not less than the undervoltage loop control trigger threshold, the undervoltage loop control trigger threshold is not less than the larger value, the inverter triggers low voltage ride through when the port voltage is less than the low voltage ride through trigger threshold, and the inverter triggers undervoltage disconnection protection when the port voltage is less than the undervoltage protection threshold; and when the port voltage is less than the undervoltage loop control trigger threshold, determining a first undervoltage reference voltage as the undervoltage control reference voltage; or when the port voltage is greater than the undervoltage loop control exit threshold, determining a second undervoltage reference voltage as the undervoltage control reference voltage, where the first undervoltage reference voltage is not less than the second undervoltage reference voltage, and the second undervoltage reference voltage is not less than the undervoltage loop control exit threshold.

In this way, the undervoltage loop control trigger threshold and the undervoltage loop control exit threshold are determined with reference to the low voltage ride through trigger threshold and the undervoltage protection threshold, and the first undervoltage reference voltage and the second undervoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to the second aspect, in a possible implementation, the processor further performs the following operation: separately setting the undervoltage loop control trigger threshold and the undervoltage loop control exit threshold based on a status parameter of the inverter, where the status parameter includes the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

In this way, the undervoltage loop control trigger threshold and the undervoltage loop control exit threshold are separately set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

According to a second aspect, in a possible implementation, a photovoltaic power generation system is provided. The photovoltaic power generation system includes the foregoing apparatus for controlling a reactive current of an inverter, and the apparatus for controlling a reactive current of an inverter controls a reactive current of the photovoltaic power generation system.

In this way, the reactive current of the photovoltaic power generation system is controlled by using the apparatus for controlling a reactive current of an inverter, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

## BRIEF DESCRIPTION OF DRAWINGS

To describe the technical solutions in embodiments of this application or in the background, the following briefly describes the accompanying drawings for describing embodiments of this application or the background.

FIG. 1 is a schematic diagram of a structure of a photovoltaic power generation system including an apparatus for controlling a reactive current of an inverter according to an embodiment of this application;
FIG. 2 is a schematic flowchart of a method for controlling a reactive current of an inverter in an implementation according to an embodiment of this application;
FIG. 3 is a schematic flowchart of a method for controlling a reactive current of an inverter in another implementation according to an embodiment of this application;
FIG. 4 is a schematic flowchart of a method for controlling a reactive current of an inverter in another implementation according to an embodiment of this application; and
FIG. 5 is a schematic flowchart of a method for controlling a reactive current of an inverter in another implementation according to an embodiment of this application.

## DESCRIPTION OF EMBODIMENTS

Embodiments of this application provide a method and an apparatus for controlling a reactive current of an inverter, and a specific application scenario of the method and the apparatus for controlling a reactive current of an inverter includes but is not limited to a new energy power generation system connected to a weak grid or an extremely weak grid. For example, a direct current generated through solar photovoltaic power generation or wind power generation needs to be converted into an alternating current by using an inverter and then the alternating current is transmitted to a grid for long-distance transmission. For a weak grid or an extremely weak grid that has a relatively small SCR, due to a voltage fluctuation, a plurality of times of fault ride through are prone to be triggered by an inverter or even disconnection is prone to be caused by a ride through failure. According to the method and the apparatus for controlling a reactive current of an inverter, an overvoltage control reactive current instruction is generated based on a port voltage of an inverter and an overvoltage control reference voltage; an undervoltage control reactive current instruction is generated based on the port voltage and an undervoltage control reference voltage; a third loop control reactive current instruction is determined based on a working status of the inverter; a comparison result of the overvoltage control reactive current instruction, the undervoltage control reactive current instruction, and the third loop control reactive current instruction is determined; and loop control corresponding to the comparison result is selected. Therefore, a reactive current is adaptively adjusted based on the port voltage, and flexible smooth switching between the overvoltage loop control, the undervoltage loop control, and the third loop control is also implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Embodiments of this application may be adjusted and improved based on a specific application environment. This is not specifically limited herein.

To make a person skilled in the art understand the technical solutions in this application better, the following describes embodiments of this application with reference to the accompanying drawings in embodiments of this application.

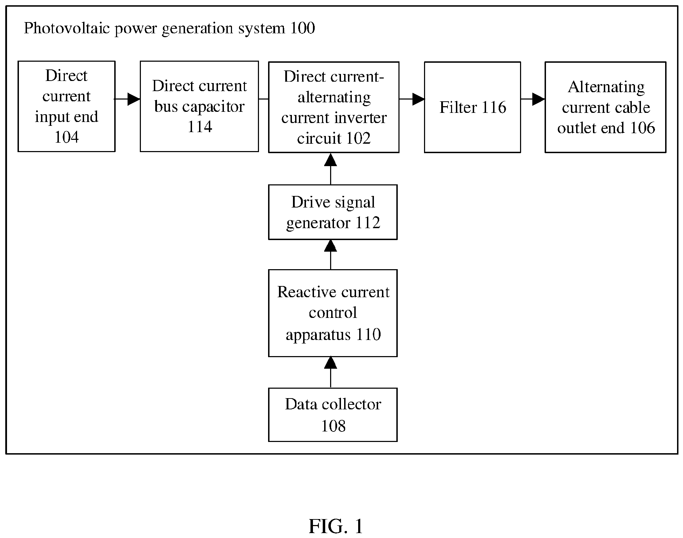

FIG. 1 is a schematic diagram of a structure of a photovoltaic power generation system including an apparatus for controlling a reactive current of an inverter according to an embodiment of this application. As shown in FIG. 1, a photovoltaic power generation system 100 includes a direct current-alternating current inverter circuit 102, a direct current input end 104, an alternating current cable outlet end 106, a data collector 108, a reactive current control apparatus 110, and a drive signal generator 112. For the direct current-alternating current inverter circuit 102, an input end is electrically connected to the direct current input end 104, and an output end is electrically connected to the alternating current cable outlet end 106. The direct current-alternating current inverter circuit 102 may be considered as a direct current to alternating current converter, to convert direct current input of the direct current input end 104 into an alternating current and then transmit the alternating current to the alternating current cable outlet end 106 for output. The data collector 108 has a suitable structure and apparatus to implement a real-time data collection function. Data collected in real time by the data collector 108 may include but is not limited to an electrical signal of the input end of the direct current-alternating current inverter circuit 102, an electrical signal of the output end of the direct current-alternating current inverter circuit 102, and various signals that can reflect an operating status and an internal status of the direct current-alternating current inverter circuit 102. For example, the direct current-alternating current inverter circuit 102 is a voltage-type inverter circuit of a three-phase inverter. In this case, data collected in real time by the data collector 108 may include but is not limited to a three-phase voltage and a three-phase current of a three-phase alternating current output by the voltage-type inverter circuit of the three-phase inverter, and a direct current voltage input to the voltage-type inverter circuit. The data collector 108 transmits the collected real-time data to the reactive current control apparatus 110. The reactive current control apparatus 110 calculates a corresponding output result according to a specific model by using, as input data, the data collected in real time, and transmits the output result to the drive signal generator 112. The drive signal generator 112 generates a corresponding control signal based on the calculated output result, and sends the control signal to the direct current-alternating current inverter circuit 102 to implement a corresponding control effect. In some example embodiments, the reactive current control apparatus 110 may further receive data from the outside, and calculate an output result by using, as input data, both the data received from the outside and the data collected in real time. In addition, the drive signal generator 112 may alternatively directly receive an external control signal, and send the external control signal to the direct current-alternating current inverter circuit to implement a control effect corresponding to the external control signal.

In some example embodiments, the photovoltaic power generation system 100 further includes a direct current bus capacitor 114 and a filter 116. For the direct current bus capacitor 114, one end is connected to the direct current input end 104, and the other end is connected to the input end of the direct current-alternating current inverter circuit 102. In a possible implementation, a positive terminal and a negative terminal of the direct current bus capacitor 114 are respectively connected to a positive terminal and a negative terminal of the input end of the direct current-alternating current inverter circuit 102, that is, a parallel relationship is formed. The positive terminal of the direct current bus capacitor 114 is connected to the positive terminal of the input end of the direct current-alternating current inverter circuit 102 as a positive direct current bus, and the negative terminal of the direct current bus capacitor 114 is connected to the negative terminal of the input end of the direct current-alternating current inverter circuit 102 as a negative direct current bus. For the filter 116, one end is connected to the output end of the direct current-alternating current inverter circuit 102, and the other end is connected to the alternating current cable outlet end 106. The alternating current cable outlet end 106 is used as an external output interface of the photovoltaic power generation system 100. The data collected in real time by the data collector 108 may include a direct current bus voltage between the positive terminal and the negative terminal of the direct current bus capacitor 114. For example, the direct current bus voltage is obtained by detecting a voltage between a positive connection cable and a negative connection cable of the input end of the direct current-alternating current inverter circuit 102. The data collected in real time by the data collector 108 may further include a port voltage. The port voltage is usually a voltage of a common connection point between an output port of a power electronic conversion apparatus and a transmission line or a transformer. In the photovoltaic power generation system 100, the port voltage should be understood as a voltage of the end that is of the filter 116 and that is connected to the alternating current cable outlet end 106. In some example embodiments, the port voltage may be alternatively a voltage of the output end of the direct current-alternating current inverter circuit 102. In some example embodiments, the direct current-alternating current inverter circuit 102 is a three-phase three-level inverter, and has advantages such as a plurality of output levels, a small voltage stress, a small ripple current, and a good harmonic characteristic. Therefore, the direct current-alternating current inverter circuit 102 is widely applied to the field of power electronics technologies, in particular in a frequency converter application scenario and a photovoltaic inverter application scenario. In some other example embodiments, the direct current-alternating current inverter circuit 102 is another type of three-phase multi-level inverter, or another type of inverter. In some example embodiments, the direct current-alternating current inverter circuit 102 may include a specific topology structure having semiconductor switching devices, to implement a control effect by controlling switching actions and closing/opening of the semiconductor switching devices. For example, the direct current-alternating current inverter circuit 102 may include an inverter circuit having semiconductor switching devices and a bridge arm structure, and each bridge arm has a corresponding semiconductor switching device, so that an output alternating current can be affected by controlling switching actions and closing/opening of the semiconductor switching devices. The semiconductor switching device may be a giant transistor (Giant Transistor, GTR), a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a gate turn-off thyristor (Gate Turn-Off Thyristor, GTO), or another suitable device. For disposition of a specific topology structure, for example, a semiconductor switching transistor and a bridge arm, refer to a common NPC type and T type. It is only necessary to meet a control requirement, that is, the photovoltaic power generation system 100 can generate a corresponding control signal based on collected data to control switching actions and closing/opening of semiconductor switching devices, thereby achieving an expected control effect. In some example embodiments, the inverter control system 100 may control output through pulse width modulation (Pulse Width Modulation, PWM), including but not limited to continuous pulse width modulation (Continuous Pulse Width Modulation, CPWM), such as sinusoidal pulse width modulation (Sinusoidal Pulse Width Modulation, SPWM), space vector pulse width modulation (Space Vector Pulse Width Modulation, SVPWM), and third-harmonic pulse width modulation (Third-Harmonic Pulse Width Modulation, THIPWM); discontinuous pulse width modulation (Discontinuous Pulse Width Modulation, DPWM), such as DPWMMIN, DPWMM0, DPWMM1, DPWMM2, DPWMM3, DPWMMAX, and GDPWM; and a model predictive control (Model Predictive Control, MPC) method. In some other example embodiments, the photovoltaic power generation system 100 may alternatively control output in a phase shift control manner; by using a closed-loop controller, such as a proportional-integral controller (Proportional-Integral Controller, PI) or a proportional-integral-derivative controller (Proportional-Integral-Derivative Controller, PID); through control based on a dq coordinate system; or in other suitable control manners. The direct current-alternating current inverter circuit 102 may include a corresponding circuit topology structure for a specific used control manner. For example, when the control manner is PWM, the direct current-alternating current inverter circuit 102 may have a typical three-phase bridge inverter circuit structure, a semiconductor switching transistor of each bridge arm is closed for half a cycle in a sinusoidal cycle, and bridge arms of three phases are alternately conducted and have a conduction angle difference of 120 degrees. An output voltage waveform obtained in this way is approximately a sine wave. These may be adjusted and improved based on a specific application environment. This is not specifically limited herein.

The direct current input end 104 of the photovoltaic power generation system 100 is connected to a photovoltaic power generation module (not shown) and receives a direct current generated by the photovoltaic power generation module. The photovoltaic power generation module is an apparatus for converting solar radiation energy into direct current energy according to a solar photovoltaic power generation effect, such as a solar panel. In some example embodiments, the direct current input end 104 may be alternatively connected to an energy storage element such as a storage battery, a fuel cell, or a solar cell. A source that provides direct current input may further include other accessories to provide more functions, such as a programmable direct current power supply and a feedback direct current electronic load. In a possible implementation, a source of direct current input is another type of new energy generation system, such as a direct current voltage source generated by a wind turbine or a hydroelectric generator set. These may be adjusted and improved based on a specific application environment. This is not specifically limited herein.

In some example embodiments, as the external output interface of the inverter control system 100, the alternating current cable outlet end 106 may directly output electric energy to a load or may return electric energy to a grid, thereby being separately applicable to a passive inverter circuit or an active inverter circuit. In a possible implementation, the photovoltaic power generation system 100 includes a grid-tied inverter tied to the grid, and the alternating current cable outlet end 106 may be directly connected to an equivalent line impedance network and the grid by using cables. Here, the equivalent line impedance network should be understood as a circuit impedance network including an equivalent resistor, inductor, and capacitor of a transmission line and a transformer. These may be adjusted and improved based on a specific application environment. This is not specifically limited herein.

In some example embodiments, the data collector 108 may implement real-time detection and collection of a voltage phase and frequency of the alternating current output end by using a phase-locked loop technology, for example, a three-phase software phase-locked loop; may implement tracking of a given signal by using a dq coordinate transformation technology, for example, enable a three-phase alternating current to be equivalent to a two-phase direct current through three-phase dq control; or may implement real-time data collection by using other suitable technologies. These may be adjusted and improved based on a specific application environment. This is not specifically limited herein.

In some example embodiments, the reactive current control apparatus 110 includes at least one processor and at least one memory. The memory stores a computer program, and the processor executes the computer program to calculate an output result based on input data according to a specific model. The input data may be directly pushed to the processor for calculation, or may be first stored in the memory and then read by the processor for calculation. The computer program may be preset, may be externally adjusted and set in real time, or may be a network model that has a machine learning characteristic and that is based on an artificial intelligence neural network technology. In a possible implementation, the reactive current control apparatus 110 further has an external interface, configured to receive input data for calculation from the outside relative to the photovoltaic power generation system 100. The processor may perform calculation based on the data received from the outside and internal data received from the data collector 108. These may be adjusted and improved based on a specific application environment. This is not specifically limited herein.

In some example embodiments, the drive signal generator 112 generates a corresponding control signal or drive signal based on an output result calculated by the reactive current control apparatus 110, to control the direct current-alternating current inverter circuit 102 to implement a to-be-achieved control effect. A specific manner of generating the control signal and specific content of the generated control signal are determined based on a specific output control manner of the photovoltaic power generation system 100 and in consideration of a corresponding circuit topology structure of the direct current-alternating current inverter circuit 102, provided that a control requirement can be met. For example, when the control manner is PWM, the generated control signal is a corresponding output voltage modulated wave, used to control switching actions and closing/opening of semiconductor switching devices, so that equivalent output includes a required waveform. These may be adjusted and improved based on a specific application environment. This is not specifically limited herein.

In some example embodiments, the filter 116 may be configured to suppress a switching high-frequency harmonic wave generated due to use of a particular control manner. The filter 116 may be of an L type, an LC type, or an LCL type, or may be a tunable filter whose filter parameter is adjustable to cope with a varying output frequency and equivalent impedance. The filter 116 may be a part of the photovoltaic power generation system 100, or may be separately disposed without being considered as an internal component of the photovoltaic power generation system 100. In a possible implementation, the photovoltaic power generation system 100 includes a grid-tied inverter tied to the grid. In this case, the filter 116 is a grid-tied filter, for example, a photovoltaic grid-tied filter that filters out a high frequency wave by using an LCL circuit or another circuit. These may be adjusted and improved based on a specific application environment. This is not specifically limited herein.

Referring to FIG. 1, in some example embodiments, the data collector 108 collects a port voltage of the inverter in real time. The memory of the reactive current control apparatus 110 stores a computer program, and in response to executing the computer program by the processor, the processor of the reactive current control apparatus 110 performs the following operations: generating an overvoltage control reactive current instruction for overvoltage loop control based on the port voltage of the inverter and an overvoltage control reference voltage, where the overvoltage loop control is marked as first loop control, and the overvoltage loop control is controlling an output reactive current of the inverter according to the overvoltage control reactive current instruction, so that an absolute value of a difference between the port voltage and the overvoltage control reference voltage is less than a first threshold; generating an undervoltage control reactive current instruction for undervoltage loop control based on the port voltage and an undervoltage control reference voltage, where the undervoltage loop control is marked as second loop control, and the undervoltage loop control is controlling the output reactive current of the inverter according to the undervoltage control reactive current instruction, so that an absolute value of a difference between the port voltage and the undervoltage control reference voltage is less than a second threshold; determining a third loop control reactive current instruction for third loop control based on a working status of the inverter, where the third loop control is independent of the first loop control and the second loop control, and the working status includes a fault ride through state, a fault recovery state, or a normal state; determining a comparison result of the overvoltage control reactive current instruction, the undervoltage control reactive current instruction, and the third loop control reactive current instruction; and selecting the first loop control, the second loop control, or the third loop control corresponding to the comparison result.

In this way, in some example embodiments, according to the photovoltaic power generation system 100 shown in FIG. 1, a reactive current is adaptively adjusted based on the port voltage, and flexible smooth switching between the overvoltage loop control, the undervoltage loop control, and the third loop control is also implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

It may be understood that the schematic structure in this embodiment of this application constitutes no specific limitation on the photovoltaic power generation system 100. In some other embodiments of this application, the photovoltaic power generation system 100 may include more or fewer components than those shown in the figure, combine some components, split some components, or have different component arrangements.

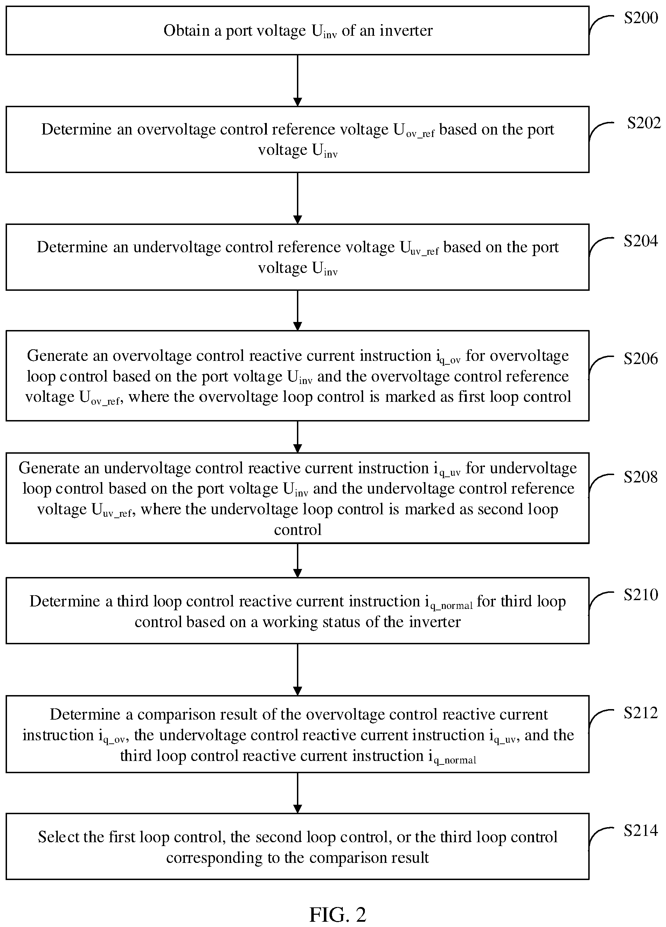

FIG. 2 is a schematic flowchart of a method for controlling a reactive current of an inverter in an implementation according to an embodiment of this application. As shown in FIG. 2, the control method includes the following steps. Step S200: Obtain a port voltage $U_{inv}$ of an inverter.

It should be understood that the inverter is a power electronic conversion apparatus for converting a direct current into an alternating current. The port voltage $U_{inv}$ of the inverter is a voltage of a common connection point between an output port of the power electronic conversion apparatus and a transmission line or a transformer. For example, assuming that the power electronic conversion apparatus is a common three-phase three-level inverter, a three-phase output end of the three-phase three-level inverter outputs a three-phase alternating current, and a three-phase port voltage is three phase voltages of a three-phase port on an alternating current side of the three-phase three-level inverter, namely, voltages between all of three phases of the three-phase port and a neutral wire or a zero wire. The port voltage $U_{inv}$ may be obtained in a real-time detection and collection technical manner, for example, by using a phase-locked loop technology, a dq coordinate transformation technology, or other suitable technology manners. The port voltage $U_{inv}$ may be alternatively obtained in an indirect manner, for example, by detecting another electrical signal of the inverter and then performing inferring.

It should be understood that the inverter includes a direct current-alternating current inverter circuit for implementing conversion from direct current input into alternating current output. An input port of the inverter is connected to a direct current input end, and the direct current input end may be an equivalent direct current voltage source or a direct current current source in a circuit. For example, for a new energy power generation system, such as a photovoltaic power generation system, direct current input comes from a direct current generated after a photovoltaic module receives light. When the direct current input end is an equivalent direct current voltage source in the circuit, the direct current-alternating current inverter circuit is a corresponding voltage-type inverter circuit. In a possible implementation, the inverter includes a direct current-alternating current inverter circuit of a specific topology structure having semiconductor switching devices, to control the port voltage by controlling switching actions and closing/opening of the semiconductor switching devices.

In some example embodiments, the inverter may further include a direct current bus capacitor including positive and negative bus capacitors, a filter, and an alternating current cable outlet end. A positive terminal of the direct current bus capacitor is connected to a positive terminal of the direct current-alternating current inverter circuit as a positive direct current bus, and a negative terminal of the direct current bus capacitor is connected to a negative terminal of the direct current-alternating current inverter circuit as a negative direct current bus. For the filter, one end is connected to an output end of the direct current-alternating current inverter circuit, and the other end is connected to the alternating current cable outlet end. The alternating current cable outlet end is connected to an equivalent line impedance network and a grid by using cables. The equivalent line impedance network should be understood as a circuit impedance network including an equivalent resistor, inductor, and capacitor of a transmission line and a transformer. These may be determined based on a specific application environment. This is not specifically limited herein.

Step S202: Determine an overvoltage control reference voltage $U_{ov\_ref}$ based on the port voltage $U_{inv}$.

The determining an overvoltage control reference voltage $U_{ov\_ref}$ based on the port voltage $U_{inv}$ of the inverter includes the following details:

First, a smaller value in a high voltage ride through trigger threshold and an overvoltage protection threshold of the inverter is determined as an overvoltage control reference base value $U_{ov\_base}$. Then, an overvoltage loop control trigger threshold $U_{ov\_enter}$ and an overvoltage loop control exit threshold $U_{ov\_exit}$ are determined according to Formula (1):

$$U_{ov\_exit} \leq U_{ov\_enter} \leq U_{ov\_base} \tag{1}$$

The overvoltage loop control exit threshold $U_{ov\_exit}$ is not greater than the overvoltage loop control trigger threshold $U_{ov\_enter}$, in other words, the overvoltage loop trigger threshold $U_{ov\_enter}$ is greater than or equal to the overvoltage loop exit threshold $U_{ov\_exit}$. The overvoltage loop control trigger threshold $U_{ov\_enter}$ is not greater than the smaller value, in other words, the overvoltage loop control trigger threshold $U_{ov\_enter}$ is not greater than the overvoltage control reference base value $U_{ov\_base}$. The inverter triggers high voltage ride through when the port voltage $U_{inv}$ is greater than the high voltage ride through trigger threshold. The inverter triggers overvoltage disconnection protection when the port voltage $U_{inv}$ is greater than the overvoltage protection threshold.

The high voltage ride through trigger threshold may be preset, may be set based on real-time statuses of the inverter and a grid to which the inverter is tied, or may be set by a host computer of the inverter through adjustment. The high voltage ride through trigger threshold is used to determine a working status of the inverter based on whether a real-time value of the port voltage falls within a normal range. When the port voltage exceeds the high voltage ride through trigger threshold, it means that the port voltage exceeds the normal range. Then, it may be determined, based on a fault determining criterion, that the inverter and the grid in which the inverter is located are in a high voltage ride through period or should switch to a fault ride through working state. To implement high voltage ride through, the port voltage of the inverter needs to be decreased to be within the normal range, in other words, decreased to be below the high voltage ride through trigger threshold.

The overvoltage protection threshold may be preset, may be set based on the real-time statuses of the inverter and the grid to which the inverter is tied, or may be set by the host computer of the inverter through adjustment. The overvoltage protection threshold is applicable to enabling the inverter to trigger overvoltage disconnection protection to avoid damage to the inverter due to overvoltage. For example, the overvoltage protection threshold may be set to a high voltage upper limit that the current inverter can withstand in design, or a high voltage upper limit specified based on the current grid and a current working environment. In actual application, the high voltage ride through trigger threshold and the overvoltage protection threshold should be understood as two protection mechanisms independent of each other, and are separately applicable to different control targets and based on different determining criteria. Based on an actual working status of the inverter and a status of the grid in which the inverter is located, the overvoltage protection threshold may be set to a voltage value less than the high voltage ride through trigger threshold, or the overvoltage protection threshold may be set to a voltage value greater than the high voltage ride through trigger threshold.

In this way, the smaller value in the high voltage ride through trigger threshold and the overvoltage protection threshold is set to the overvoltage control reference base value $U_{ov\_base}$, and the overvoltage loop control trigger threshold

$U_{ov\_enter}$ and the overvoltage loop control exit threshold $U_{ov\_exit}$ are calculated based on the overvoltage control reference base value $U_{ov\_base}$, so that control requirements in a plurality of working statuses, including a fault ride through state, a fault recovery state, and a plurality of other possible working statuses, of the inverter can be simultaneously considered, thereby effectively avoiding repeated triggering of high voltage ride through, oscillation of high voltage ride through, and disconnection.

Then, a first overvoltage reference voltage $U_{ov\_ref1}$, a second overvoltage reference voltage $U_{ov\_ref2}$, and the overvoltage control reference voltage $U_{ov\_ref}$ are determined according to Formula (2) and Formula (3):

$$U_{ov\_ref1} \leq U_{ov\_ref2} \leq U_{ov\_exit} \tag{2}$$

$$U_{ov\_ref} = \begin{cases} U_{ov\_ref1}, U_{inv} > U_{ov\_enter} \\ U_{ov\_ref2}, U_{inv} < U_{ov\_exit} \end{cases} \tag{3}$$

When the port voltage $U_{inv}$ of the inverter is greater than the overvoltage loop control trigger threshold $U_{ov\_enter}$, the first overvoltage reference voltage $U_{ov\_ref1}$ is determined as the overvoltage control reference voltage $U_{ov\_ref}$; or when the port voltage $U_{inv}$ of the inverter is less than the overvoltage loop control exit threshold $U_{ov\_exit}$, the second overvoltage reference voltage $U_{ov\_ref2}$ is determined as the overvoltage control reference voltage $U_{ov\_ref}$. The first overvoltage reference voltage $U_{ov\_ref1}$ is not greater than the second overvoltage reference voltage $U_{ov\_ref2}$, and the second overvoltage reference voltage $U_{ov\_ref2}$ is not greater than the overvoltage loop control exit threshold $U_{ov\_exit}$. In a possible implementation, the first overvoltage reference voltage $U_{ov\_ref1}$ needs to be decreased by a specific value relative to the second overvoltage reference voltage $U_{ov\_ref2}$, and the second overvoltage reference voltage $U_{ov\_ref2}$ also needs to be decreased by a specific value relative to the overvoltage loop control exit threshold $U_{ov\_exit}$.

In this way, the first overvoltage reference voltage $U_{ov\_ref1}$ and the second overvoltage reference voltage $U_{ov\_ref2}$ are set, and it is required that the first overvoltage reference voltage $U_{ov\_ref1}$ should be not greater than the second overvoltage reference voltage $U_{ov\_ref2}$. Therefore, when the port voltage $U_{inv}$ exceeds the overvoltage loop control trigger threshold $U_{ov\_enter}$, a voltage lower than or at least equal to the first overvoltage reference voltage $U_{ov\_ref1}$ is used; or when the port voltage $U_{inv}$ is less than the overvoltage loop control exit threshold $U_{ov\_exit}$, a voltage higher than or at least equal to the second overvoltage reference voltage $U_{ov\_ref2}$ is used, so that stronger overvoltage loop control, namely, a lower overvoltage control reference voltage $U_{ov\_ref}$, is applied in a case in which the port voltage $U_{inv}$ is close to the overvoltage loop control trigger threshold $U_{ov\_enter}$ than a case in which the port voltage $U_{inv}$ is close to the overvoltage loop control exit threshold $U_{ov\_exit}$. In this way, overvoltage loop control is more sensitive to a sudden increase in the port voltage $U_{inv}$, so that it is more helpful to reduce a possibility that the port voltage $U_{inv}$ is increased to trigger high voltage ride through.

In a possible implementation, the determining an overvoltage control reference voltage $U_{ov\_ref}$ based on the port voltage $U_{inv}$ includes the following details: determining the overvoltage loop control trigger threshold $U_{ov\_enter}$ and the overvoltage loop control exit threshold $U_{ov\_exit}$ based on the smaller value $U_{ov\_base}$ in the high voltage ride through trigger threshold and the overvoltage protection threshold of the inverter, where the overvoltage loop control exit threshold $U_{ov\_exit}$ is not greater than the overvoltage loop control trigger threshold $U_{ov\_enter}$, the overvoltage loop control trigger threshold $U_{ov\_enter}$ is not greater than the smaller value $U_{ov\_base}$, the inverter triggers high voltage ride through when the port voltage $U_{inv}$ is greater than the high voltage ride through trigger threshold, and the inverter triggers overvoltage disconnection protection when the port voltage $U_{inv}$ is greater than the overvoltage protection threshold; and when the port voltage $U_{inv}$ is greater than the overvoltage loop control trigger threshold $U_{ov\_enter}$, determining the first overvoltage reference voltage $U_{ov\_ref1}$ as the overvoltage control reference voltage $U_{ov\_ref}$; or when the port voltage $U_{inv}$ is less than the overvoltage loop control exit threshold $U_{ov\_exit}$, determining the second overvoltage reference voltage $U_{ov\_ref2}$ as the overvoltage control reference voltage $U_{ov\_ref}$. The first overvoltage reference voltage $U_{ov\_ref1}$ is not greater than the second overvoltage reference voltage $U_{ov\_ref2}$, and the second overvoltage reference voltage $U_{ov\_ref2}$ is not greater than the overvoltage loop control exit threshold $U_{ov\_exit}$.

In a possible implementation, the overvoltage loop control trigger threshold $U_{ov\_enter}$ and the overvoltage loop control exit threshold $U_{ov\_exit}$ may be separately set based on a status parameter of the inverter. The status parameter includes an average port voltage value that is of the inverter and that is obtained before the fault ride through state, a rated voltage of the inverter, output power of the inverter, a power system short-circuit ratio corresponding to the inverter, or an average reactive power value that is of the inverter and that is obtained before the fault ride through state. Some of these status parameters, such as the rated voltage, may be preset, and some of these status parameters, such as the system short-circuit ratio, may be detected based on the real-time statuses of the inverter and the grid to which the inverter is tied.

In this way, the overvoltage loop control trigger threshold and the overvoltage loop control exit threshold are determined with reference to the high voltage ride through trigger threshold and the overvoltage protection threshold, and the first overvoltage reference voltage and the second overvoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S204: Determine an undervoltage control reference voltage $U_{uv\_ref}$ based on the port voltage $U_{inv}$.

The determining an undervoltage control reference voltage $U_{uv\_ref}$ based on the port voltage $U_{inv}$ of the inverter includes the following details:

First, a larger value in a low voltage ride through trigger threshold and an undervoltage protection threshold of the inverter is determined as an undervoltage control reference base value $U_{uv\_base}$. Then, an undervoltage loop control trigger threshold $U_{uv\_enter}$ and an undervoltage loop control exit threshold $U_{uv\_exit}$ are determined according to Formula (4):

$$U_{uv\_base} \leq U_{uv\_enter} \leq U_{uv\_exit} \tag{4}$$

The undervoltage loop control exit threshold $U_{uv\_exit}$ is not less than the undervoltage loop control trigger threshold $U_{uv\_enter}$, in other words, the undervoltage loop trigger threshold $U_{uv\_enter}$ is less than or equal to the undervoltage loop exit threshold $U_{uv\_exit}$. The undervoltage loop control trigger threshold $U_{uv\_enter}$ is not less than the larger value, in other words, the undervoltage loop control trigger threshold $U_{uv\_enter}$ is not less than the undervoltage control reference base value $U_{uv\_base}$. The inverter triggers low voltage ride through when the port voltage $U_{inv}$ is less than the low voltage ride through trigger threshold. The inverter triggers undervoltage disconnection protection when the port voltage $U_{inv}$ is less than the undervoltage protection threshold.

The low voltage ride through trigger threshold may be preset, may be set based on the real-time statuses of the inverter and the grid to which the inverter is tied, or may be set by the host computer of the inverter through adjustment. The low voltage ride through trigger threshold is used to determine a working status of the inverter based on whether a real-time value of the port voltage falls within a normal range. When the port voltage is lower than the low voltage ride through trigger threshold, it means that the port voltage exceeds the normal range. Then, it may be determined, based on a fault determining criterion, that the inverter and the grid in which the inverter is located are in a low voltage ride through period or should switch to a fault ride through working state. To implement low voltage ride through, the port voltage of the inverter needs to be increased to be within the normal range, in other words, increased to be above the low voltage ride through trigger threshold.

The undervoltage protection threshold may be preset, may be set based on the real-time statuses of the inverter and the grid to which the inverter is tied, or may be set by the host computer of the inverter through adjustment. The undervoltage protection threshold is applicable to enabling the inverter to trigger undervoltage disconnection protection to avoid damage to the inverter due to undervoltage. For example, the undervoltage protection threshold may be set to a low voltage lower limit that the current inverter can withstand in design, or a low voltage lower limit specified based on the current grid and the current working environment. In actual application, the low voltage ride through trigger threshold and the undervoltage protection threshold should be understood as two protection mechanisms independent of each other, and are separately applicable to different control targets and based on different determining criteria. Based on the actual working status of the inverter and the status of the grid in which the inverter is located, the undervoltage protection threshold may be set to a voltage value less than the low voltage ride through trigger threshold, or the undervoltage protection threshold may be set to a voltage value greater than the low voltage ride through trigger threshold.

In this way, the larger value in the low voltage ride through trigger threshold and the undervoltage protection threshold is set to the undervoltage control reference base value $U_{uv\_base}$, and the undervoltage loop control trigger threshold $U_{uv\_enter}$ and the undervoltage loop control exit threshold $U_{uv\_exit}$ are calculated based on the undervoltage control reference base value $U_{uv\_base}$, so that control requirements in a plurality of working statuses, including a fault ride through state, a fault recovery state, and a plurality of other possible working statuses, of the inverter can be simultaneously considered, thereby effectively avoiding repeated triggering of low voltage ride through, oscillation of low voltage ride through, and disconnection.

Then, a first undervoltage reference voltage $U_{uv\_ref1}$, a second undervoltage reference voltage $U_{uv\_ref2}$, and the undervoltage control reference voltage $U_{uv\_ref}$ are determined according to Formula (5) and Formula (6):

$$U_{uv\_exit} \leq U_{uv\_ref2} \leq U_{uv\_ref1} \tag{5}$$

$$U_{uv\_ref} = \begin{cases} U_{uv\_ref1}, U_{inv} < U_{uv\_enter} \\ U_{uv\_ref2}, U_{inv} > U_{uv\_exit} \end{cases} \qquad (6)$$

When the port voltage $U_{inv}$ of the inverter is less than the undervoltage loop control trigger threshold $U_{uv\_enter}$, the first undervoltage reference voltage $U_{uv\_ref1}$ is determined as the undervoltage control reference voltage $U_{uv\_ref}$; or when the port voltage $U_{inv}$ of the inverter is greater than the undervoltage loop control exit threshold $U_{uv\_exit}$, the second undervoltage reference voltage $U_{uv\_ref2}$ is determined as the undervoltage control reference voltage $U_{uv\_ref}$. The first undervoltage reference voltage $U_{uv\_ref1}$ is not less than the second undervoltage reference voltage $U_{uv\_ref2}$, and the second undervoltage reference voltage $U_{uv\_ref2}$ is not less than the undervoltage loop control exit threshold $U_{uv\_exit}$. In a possible implementation, the first undervoltage reference voltage $U_{uv\_ref1}$ needs to be increased by a specific value relative to the second undervoltage reference voltage $U_{uv\_ref2}$, and the second undervoltage reference voltage $U_{uv\_ref2}$ also needs to be increased by a specific value relative to the undervoltage loop control exit threshold $U_{uv\_exit}$.

In this way, the first undervoltage reference voltage $U_{uv\_ref1}$ and the second undervoltage reference voltage $U_{uv\_ref2}$ are set, and it is required that the first undervoltage reference voltage $U_{uv\_ref1}$ should be not less than the second undervoltage reference voltage $U_{uv\_ref2}$. Therefore, when the port voltage $U_{inv}$ is less than the undervoltage loop control trigger threshold $U_{uv\_enter}$, a voltage higher than or at least equal to the first undervoltage reference voltage $U_{uv\_ref1}$ is used; or when the port voltage $U_{inv}$ is greater than the undervoltage loop control exit threshold $U_{uv\_exit}$, a voltage lower than or at least equal to the second undervoltage reference voltage $U_{uv\_ref2}$ is used, so that stronger undervoltage loop control, namely, a higher undervoltage control reference voltage $U_{uv\_ref}$, is applied in a case in which the port voltage $U_{inv}$ is close to the undervoltage loop control trigger threshold $U_{uv\_enter}$ than a case in which the port voltage $U_{inv}$ is close to the undervoltage loop control exit threshold $U_{uv\_exit}$. In this way, undervoltage loop control is more sensitive to a sudden decrease in the port voltage $U_{inv}$, so that it is more helpful to reduce a possibility that the port voltage $U_{inv}$ is decreased to trigger low voltage ride through.

In a possible implementation, the determining an undervoltage control reference voltage $U_{ov\_ref}$ based on the port voltage $U_{inv}$ includes the following details: determining the undervoltage loop control trigger threshold $U_{uv\_enter}$ and the undervoltage loop control exit threshold $U_{uv\_exit}$ based on the larger value $U_{uv\_base}$ in the low voltage ride through trigger threshold and the undervoltage protection threshold of the inverter, where the undervoltage loop control exit threshold $U_{uv\_exit}$ is not less than the undervoltage loop control trigger threshold $U_{uv\_enter}$, the undervoltage loop control trigger threshold $U_{uv\_enter}$ is not less than the larger value $U_{uv\_base}$, the inverter triggers low voltage ride through when the port voltage $U_{inv}$ is less than the low voltage ride through trigger threshold, and the inverter triggers undervoltage disconnection protection when the port voltage $U_{inv}$ is less than the undervoltage protection threshold; and when the port voltage $U_{inv}$ is less than the undervoltage loop control trigger threshold $U_{uv\_enter}$, determining the first undervoltage reference voltage $U_{uv\_ref1}$ as the undervoltage control reference voltage $U_{ov\_ref}$; or when the port voltage $U_{inv}$ is greater than the undervoltage loop control exit threshold $U_{uv\_exit}$, determining the second undervoltage reference voltage $U_{uv\_ref2}$ as the undervoltage control reference voltage $U_{ov\_ref}$. The first undervoltage reference voltage $U_{uv\_ref1}$ is not less than the second undervoltage reference voltage $U_{uv\_ref2}$, and the second undervoltage reference voltage $U_{uv\_ref2}$ is not less than the undervoltage loop control exit threshold $U_{uv\_exit}$.

In a possible implementation, the undervoltage loop control trigger threshold $U_{uv\_enter}$ and the undervoltage loop control exit threshold $U_{uv\_exit}$ are separately set based on a status parameter of the inverter. The status parameter includes the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state. Some of these status parameters, such as the rated voltage, may be preset, and some of these status parameters, such as the system short-circuit ratio, may be detected based on the real-time statuses of the inverter and the grid to which the inverter is tied.

In this way, the undervoltage loop control trigger threshold and the undervoltage loop control exit threshold are determined with reference to the low voltage ride through trigger threshold and the undervoltage protection threshold, and the first undervoltage reference voltage and the second undervoltage reference voltage are determined based on a real-time port voltage, so that adaptive adjustment based on the real-time port voltage and flexible control adapted to different cases are implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S206: Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control.

The overvoltage control reactive current instruction $i_{q\_ov}$ for overvoltage loop control is generated based on the port voltage $U_{inv}$ and the overvoltage control reference voltage $U_{ov\_ref}$ according to Formula (7):

$$i_{q\_ov} = G(s) * (U_{ov\_ref} - U_{inv}) \tag{7}$$

G(s) is a transfer function used to represent a mathematical model corresponding to the inverter, and a corresponding response (the overvoltage control reactive current instruction $i_{q\_ov}$) is obtained based on an incentive (a difference between the overvoltage control reference voltage $U_{ov\_ref}$ and the port voltage $U_{inv}$). The transfer function G(s) may be linear, may be non-linear, may be represented by a piecewise function, or may be in another mathematical form. Usually, different incentives cause different responses, and also cause different control effects. In this way, different overvoltage control reference voltages $U_{ov\_ref}$ are set, so that the inverter can generate different control effects for a same port voltage $U_{inv}$, thereby helping flexibly adjust a required response based on a current status of the inverter and a control target that needs to be achieved. For example, the overvoltage loop control is controlling an output reactive current of the inverter according to the overvoltage control reactive current instruction $i_{q\_ov}$, so that an absolute value of the difference between the port voltage $U_{inv}$ and the overvoltage control reference voltage $U_{ov\_ref}$ is less than a first threshold. The first threshold may be preset, may be set based on a type of the inverter, or may be set based on an actual working status of the inverter.

In some example embodiments, the transfer function G(s) may take the form of a controller, including, but not limited to, a closed-loop controller such as a proportional-integral controller (PI), or a proportional-integral-derivative controller (PID).

For example, for the proportional-integral controller (PI), G(s) is represented as follows:

$$G(s) = K_p + \frac{K_i}{s} \tag{8}$$

$K_p$ represents a proportional adjustment coefficient, and $K_i$ represents an integral adjustment coefficient.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S208: Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control.

The undervoltage control reactive current instruction $i_{q\_uv}$ for undervoltage loop control is generated based on the port voltage $U_{inv}$ and the undervoltage control reference voltage $U_{uv\_ref}$ according to Formula (9):

$$i_{q\_uv} = G(s) * (U_{uv\_ref} - U_{inv}) \tag{9}$$

G(s) is a transfer function used to represent a mathematical model corresponding to the inverter, and a corresponding response (the undervoltage control reactive current instruction $i_{q\_uv}$) is obtained based on an incentive (a difference between the undervoltage control reference voltage $U_{uv\_ref}$ and the port voltage $U_{inv}$). The transfer function G(s) may be linear, may be non-linear, may be represented by a piecewise function, or may be in another mathematical form. Usually, different incentives cause different responses, and also cause different control effects. In this way, different undervoltage control reference voltages $U_{uv\_ref}$ are set, so that the inverter can generate different control effects for a same port voltage $U_{inv}$, thereby helping flexibly adjust a required response based on a current status of the inverter and a control target that needs to be achieved. For example, the undervoltage loop control is controlling the output reactive current of the inverter according to the undervoltage control reactive current instruction $i_{q\_uv}$, so that an absolute value of the difference between the port voltage $U_{inv}$ and the undervoltage control reference voltage $U_{ov\_ref}$ is less than a second threshold. The second threshold may be preset, may be set based on a type of the inverter, or may be set based on an actual working status of the inverter.

In some example embodiments, the transfer function G(s) may take the form of a controller, including, but not limited to, a closed-loop controller such as a proportional-integral controller (PI), or a proportional-integral-derivative controller (PID). For example, the representation manner in the foregoing Formula (8) is used.

In a possible implementation, different transfer functions may be separately designed for the overvoltage loop control and the undervoltage loop control, that is, Formula (7) and Formula (9) may have different transfer functions G(s), thereby facilitating flexible control for different control targets and different grid environments.

In this way, adaptive adjustment is performed based on a real-time port voltage, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S210: Determine a third loop control reactive current instruction $i_{q\_normal}$ for third loop control based on a working status of the inverter.

The third loop control is independent of the first loop control, namely, the overvoltage loop control, and the second loop control, namely, the undervoltage loop control. The working status includes a fault ride through state, a fault recovery state, or a normal state. When the working status is the fault ride through state, the third loop control reactive current instruction $i_{q\_normal}$ is a fault ride through reactive current instruction; when the working status is the fault recovery state, the third loop control reactive current instruction $i_{q\_normal}$ is a fault recovery reactive current instruction; or when the working status is the normal state, the third loop control reactive current instruction $i_{q\_normal}$ is a power scheduling reactive current instruction. The fault ride through reactive current instruction is used to control the inverter to output required reactive power in the fault ride through state. In actual application, a fault ride through capability of the inverter is strictly required, and specific reactive power needs to be output to facilitate recovery of the inverter and the grid from a fault. In particular, a grid-tied inverter working in a weak grid or an extremely weak grid faces a great challenge. Therefore, the fault ride through reactive current instruction is usually preset according to a specific specification and an industrial standard. The fault recovery reactive current instruction is applicable to a period in which the inverter is in recovery after a fault occurs. In this case, matching between active power and reactive power needs to be implemented with reference to a real-time status of the inverter. The power scheduling reactive current instruction in the normal state is usually a scheduling instruction sent by the host computer in the grid in which the inverter is located, to control the inverter to output specified reactive power to meet a power scheduling control requirement. Therefore, the third loop control reactive current instruction $i_{q\_normal}$ is preset or determined based on an instruction received from the host computer relative to the inverter.

The working status is determined based on the port voltage $U_{inv}$ or an instruction of the host computer relative to the inverter. For example, when the port voltage $U_{inv}$ is greater than the high voltage ride through trigger threshold or less than the low voltage ride through trigger threshold, the working status may be determined as the fault ride through state. In duration existing after the port voltage $U_{inv}$ is decreased to the high voltage ride through trigger threshold or increased to the low voltage ride through trigger threshold, the working status may be determined as the fault recovery state. The working status may be alternatively specified by the host computer based on an actual requirement. For example, the host computer predicts, based on statuses of the inverter and the grid to which the inverter is tied, that the inverter is to encounter a risk that the voltage is suddenly increased to exceed the high voltage ride through trigger threshold, to indicate the inverter to switch to the fault ride through state in advance.

This facilitates flexible control for different control targets and different grid environments.

Step S212: Determine a comparison result of the overvoltage control reactive current instruction $i_{q\_ov}$, the undervoltage control reactive current instruction $i_{q\_uv}$, and the third loop control reactive current instruction $i_{q\_normal}$.

Assuming that an output current direction of the inverter is a positive reference direction, a reactive current instruction loop contention solution may be performed based on the positive reference direction according to Formula (10) and Formula (11):

$$i_{q\_temp} = MIN(i_{q\_normal}, i_{q\_uv}) \tag{10}$$

$$i_{q\_ref} = MAX(i_{q\_temp}, i_{q\_ov}) \tag{11}$$

MIN is a minimum function, MAX is a maximum function, $i_{q\_normal}$ is the third loop control reactive current instruction, and $i_{q\_temp}$ is a minimum result in the third loop control reactive current instruction $i_{q\_normal}$ and the undervoltage control reactive current instruction $i_{q\_uv}$. The reactive current instruction loop contention solution may be represented as follows: determining the minimum result $i_{q\_temp}$ in the undervoltage control reactive current instruction $i_{q\_uv}$ and the third loop control reactive current instruction $i_{q\_normal}$; determining a maximum result in the minimum result $i_{q\_temp}$ and the overvoltage control reactive current instruction $i_{q\_ov}$ as a final reactive current instruction $i_{q\_ref}$; and using the maximum result, namely, the final reactive current instruction $i_{q\_ref}$, as the comparison result of the overvoltage control reactive current instruction $i_{q\_ov}$, the undervoltage control reactive current instruction $i_{q\_uv}$, and the third loop control reactive current instruction $i_{q\_normal}$.

In a possible implementation, the reactive current instruction loop contention solution may be alternatively represented as follows: determining a first maximum result in the undervoltage control reactive current instruction $i_{q\_uv}$ and the overvoltage control reactive current instruction $i_{q\_ov}$; determining a second maximum result in the third loop control reactive current instruction $i_{q\_normal}$ and the overvoltage control reactive current instruction $i_{q\_ov}$; determining a minimum result in the first maximum result and the second maximum result as a final reactive current instruction $i_{q\_ref}$; and using the minimum result, namely, the final reactive current instruction $i_{q\_ref}$, as the comparison result of the overvoltage control reactive current instruction $i_{q\_ov}$, the undervoltage control reactive current instruction $i_{q\_uv}$, and the third loop control reactive current instruction $i_{q\_normal}$.

In this way, a specific reactive current instruction loop contention solution is applied to the overvoltage control reactive current instruction, the undervoltage control reactive current instruction, and the third loop control reactive current instruction, so that requirements of the overvoltage loop control, the undervoltage loop control, and the third loop control are all taken into consideration, and flexible smooth switching between the overvoltage loop control, the undervoltage loop control, and the third loop control is implemented, to help stabilize the port voltage near a reference voltage, thereby avoiding a plurality of times of fault ride through triggered by the inverter and disconnection caused by a ride through failure in a weak grid or an extremely weak grid.

Based on the foregoing assumption that the output current direction of the inverter is the positive reference direction, a maximum result and a minimum result in a corresponding reactive current instruction loop contention solution are also corresponding reactive current instructions obtained based on the positive reference direction. In actual application, it is also possible to assume that an output current direction of the inverter is a negative reference direction, and therefore the reactive current instruction loop contention solution is correspondingly adjusted.

Assuming that an output current direction of the inverter is a negative reference direction, based on the negative reference direction, the reactive current instruction loop contention solution may be alternatively represented as follows: determining a maximum result in the undervoltage control reactive current instruction and the third loop control reactive current instruction based on the negative reference direction; and determining a minimum result in the maximum result and the overvoltage control reactive current instruction based on the negative reference direction, where the minimum result is the comparison result. The reactive current instruction loop contention solution may be alternatively represented as follows: determining a first minimum result in the undervoltage control reactive current instruction and the overvoltage control reactive current instruction based on the negative reference direction; determining a second minimum result in the third loop control reactive current instruction and the overvoltage control reactive current instruction based on the negative reference direction; and determining a maximum result in the first minimum result and the second minimum result based on the negative reference direction, where the maximum result is the comparison result.

In this way, the comparison result is determined, so that flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

In a possible implementation, the comparison result is a weighted comparison result, that is, the overvoltage control reactive current instruction $i_{q\_ov}$, the undervoltage control reactive current instruction $i_{q\_uv}$, and the third loop control reactive current instruction $i_{q\_normal}$ are respectively multiplied by weight values, and then a reactive current instruction loop contention solution is performed. The reactive current instruction loop contention solution in which the weighted comparison result is used includes the following details: determining a first weight value corresponding to the first loop control, a second weight value corresponding to the second loop control, and a third weight value corresponding to the third loop control; calculating a weighted overvoltage control reactive current instruction based on the overvoltage control reactive current instruction $i_{q\_ov}$ and the first weight value; calculating a weighted undervoltage control reactive current instruction based on the undervoltage control reactive current instruction $i_{q\_uv}$ and the second weight value; calculating a weighted third loop control reactive current instruction based on the third loop control reactive current instruction $i_{q\_normal}$ and the third weight value; and determining the comparison result based on the weighted overvoltage control reactive current instruction, the weighted undervoltage control reactive current instruction, and the weighted third loop control reactive current instruction.

The first weight value, the second weight value, and the third weight value are separately determined based on the working status of the inverter and the status of the grid to which the inverter is tied. For example, when the inverter is in the fault ride through state, the third loop control reactive current instruction $i_{q\_normal}$ is a fault recovery reactive current instruction. The third weight value may be adjusted to increase a probability that the third loop control is selected as a final comparison result. That is, loop control of a specific type is focused on based on a control target through comparison with weighting coefficient adjustment.

In a possible implementation, the first weight value, the second weight value, and the third weight value respectively have independent time parameters. The time parameters are determined based on duration of the working status. That is, the weight value may be a function that varies with time. For example, in duration existing after a fault state of the inverter is released, the inverter is in the fault recovery state. In this case, implementation of third loop control corresponding to the fault recovery reactive current instruction is focused on. Therefore, a time parameter related to fault recovery duration may be set for the third weight value.

In this way, the weight values are determined based on the working status of the inverter and the status of the grid, so that the weighted comparison result can be adjusted based on an actual case, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S214: Select the first loop control, the second loop control, or the third loop control corresponding to the comparison result.

The comparison result is one of the overvoltage control reactive current instruction $i_{q\_ov}$, the undervoltage control reactive current instruction $i_{q\_uv}$, and the third loop control reactive current instruction $i_{q\_normal}$. Corresponding specific loop control may be determined based on the comparison result.

In this way, flexible smooth switching between the overvoltage loop control, the undervoltage loop control, and the third loop control is implemented, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

In a possible implementation, when the overvoltage control reference voltage $U_{ov\_ref}$ is equal to the undervoltage control reference voltage $U_{uv\_ref}$, the overvoltage loop control and the undervoltage loop control are same single loop control. In this case, the comparison result is equivalent to one selected from two types of loop contention. In this way, the overvoltage loop control and the undervoltage loop control are simplified as the same single loop control, so that a system structure and a control process are simplified, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

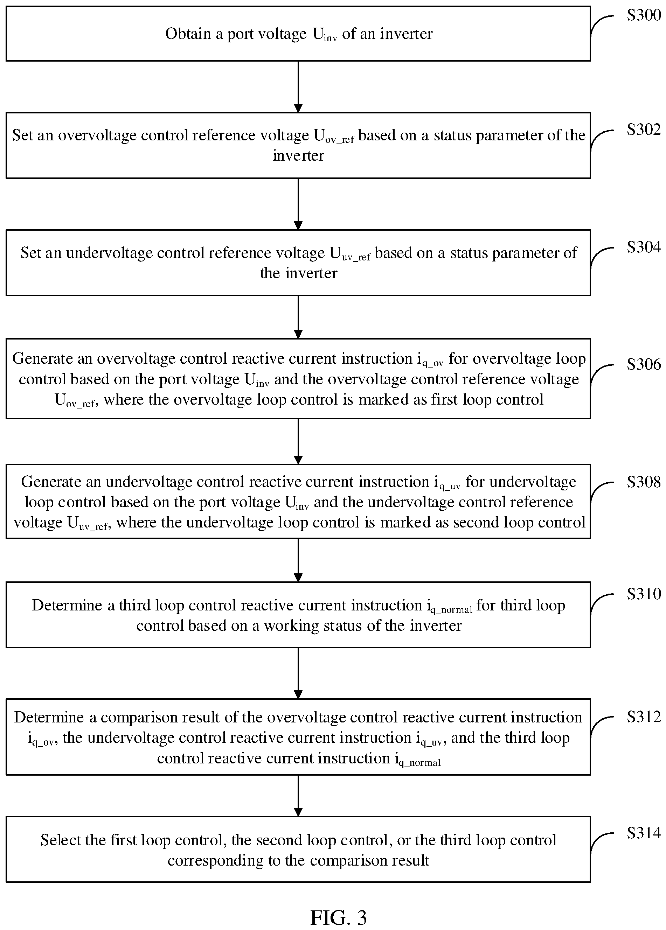

FIG. 3 is a schematic flowchart of a method for controlling a reactive current of an inverter in another implementation according to an embodiment of this application. As shown in FIG. 3, the control method includes the following steps. Step S300: Obtain a port voltage $U_{inv}$ of an inverter.

Details of step S300 are basically the same as those of step S200. Details are not described herein again.

Step S302: Set an overvoltage control reference voltage $U_{ov\_ref}$ based on a status parameter of the inverter.

A main difference between step S302 and step S202 lies in that the overvoltage control reference voltage $U_{ov\_ref}$ does not need to be set based on a real-time value of the port voltage $U_{inv}$ of the inverter. Specifically, the status parameter includes one or any combination of a plurality of the following: an average port voltage value that is of the inverter and that is obtained before a fault ride through state, a rated voltage of the inverter, output power of the inverter, an overvoltage protection point of the inverter, a power system short-circuit ratio corresponding to the inverter, or an average reactive power value that is of the inverter and that is obtained before the fault ride through state. Some of these status parameters, such as the rated voltage, may be preset; some of these status parameters, such as the average port voltage value that is of the inverter and that is obtained before the fault ride through state or the average reactive power value that is of the inverter and that is obtained before the fault ride through state, do not depend on the real-time value of the port voltage $U_{inv}$, but are determined based on a previous status of the inverter; and some of these status parameters, such as the output power of the inverter or the system short-circuit ratio, do not depend on the real-time value of the port voltage $U_{inv}$, but are determined based on other electrical signals of the inverter. The overvoltage protection point is a preset voltage threshold, and is used for overvoltage disconnection protection.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid.

Step S304: Set an undervoltage control reference voltage $U_{uv\_ref}$ based on a status parameter of the inverter.

A main difference between step S304 and step S204 lies in that the undervoltage control reference voltage $U_{uv\_ref}$ does not need to be set based on the real-time value of the port voltage $U_{inv}$ of the inverter. Specifically, the status parameter includes one or any combination of a plurality of the following: the average port voltage value that is of the inverter and that is obtained before the fault ride through state, the rated voltage of the inverter, the output power of the inverter, an undervoltage protection point of the inverter, the power system short-circuit ratio corresponding to the inverter, or the average reactive power value that is of the inverter and that is obtained before the fault ride through state. Some of these status parameters, such as the rated voltage, may be preset; some of these status parameters, such as the average port voltage value that is of the inverter and that is obtained before the fault ride through state or the average reactive power value that is of the inverter and that is obtained before the fault ride through state, do not depend on the real-time value of the port voltage $U_{inv}$, but are determined based on a previous status of the inverter; and some of these status parameters, such as the output power of the inverter or the system short-circuit ratio, do not depend on the real-time value of the port voltage $U_{inv}$, but are determined based on other electrical signals of the inverter. The undervoltage protection point is a preset voltage threshold, and is used for undervoltage disconnection protection.

In this way, the reference voltage is set based on the status parameter, so that flexible control is performed based on different control targets, to facilitate stabilization of the port voltage near the reference voltage, and also facilitate matching between active power and reactive power, thereby helping avoid a plurality of times of fault ride through triggered by the inverter and disconnection caused by a ride through failure in a weak grid or an extremely weak grid. Step S306: Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control.

Details of step S306 are basically the same as those of step S206. Details are not described herein again.

Step S308: Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control.

Details of step S308 are basically the same as those of step S208. Details are not described herein again.

Step S310: Determine a third loop control reactive current instruction $i_{q\_normal}$ for third loop control based on a working status of the inverter.

Details of step S310 are basically the same as those of step S210. Details are not described herein again.

Step S312: Determine a comparison result of the overvoltage control reactive current instruction $i_{q\_ov}$, the undervoltage control reactive current instruction $i_{q\_uv}$, and the third loop control reactive current instruction $i_{q\_normal}$.

Details of step S312 are basically the same as those of step S212. Details are not described herein again.

Step S314: Select the first loop control, the second loop control, or the third loop control corresponding to the comparison result.

Details of step S314 are basically the same as those of step S214. Details are not described herein again.

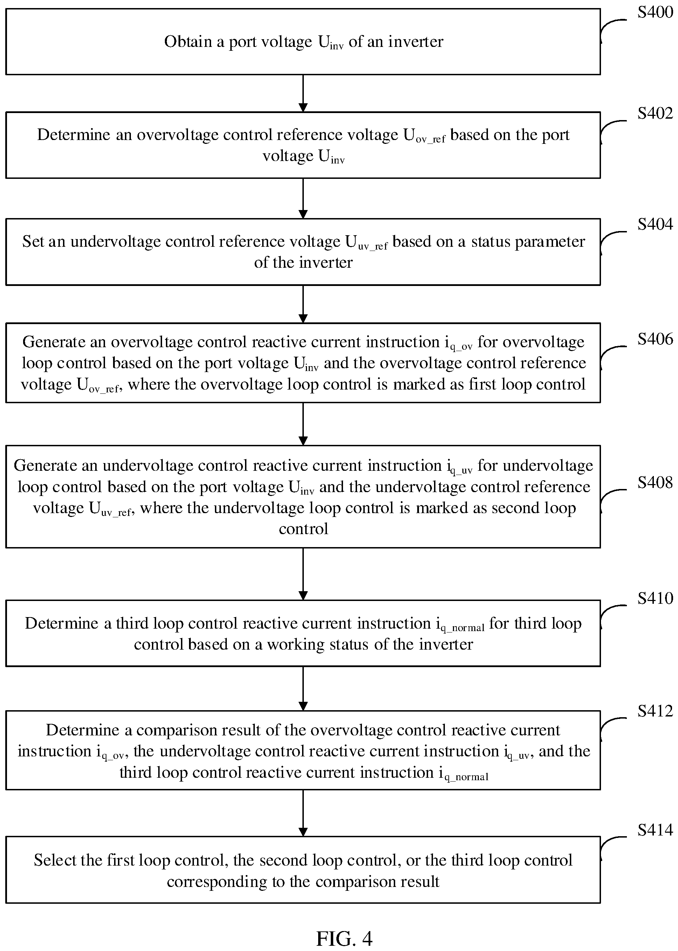

FIG. 4 is a schematic flowchart of a method for controlling a reactive current of an inverter in another implementation according to an embodiment of this application. As shown in FIG. 4, the control method includes the following steps. Step S400: Obtain a port voltage $U_{inv}$ of an inverter.

Details of step S400 are basically the same as those of step S200. Details are not described herein again.

Step S402: Determine an overvoltage control reference voltage $U_{ov\_ref}$ based on the port voltage $U_{inv}$.

Details of step S402 are basically the same as those of step S202. Details are not described herein again.

Step S404: Set an undervoltage control reference voltage $U_{uv\_ref}$ based on a status parameter of the inverter.

Details of step S404 are basically the same as those of step S304. Details are not described herein again.

Step S406: Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control.

Details of step S406 are basically the same as those of step S206. Details are not described herein again.

Step S408: Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control.

Details of step S408 are basically the same as those of step S208. Details are not described herein again.

Step S410: Determine a third loop control reactive current instruction $i_{q\_normal}$ for third loop control based on a working status of the inverter.

Details of step S410 are basically the same as those of step S210. Details are not described herein again.

Step S412: Determine a comparison result of the overvoltage control reactive current instruction $i_{q\_ov}$, the undervoltage control reactive current instruction $i_{q\_uv}$, and the third loop control reactive current instruction $i_{q\_normal}$.

Details of step S412 are basically the same as those of step S212. Details are not described herein again.

Step S414: Select the first loop control, the second loop control, or the third loop control corresponding to the comparison result.

Details of step S414 are basically the same as those of step S214. Details are not described herein again.

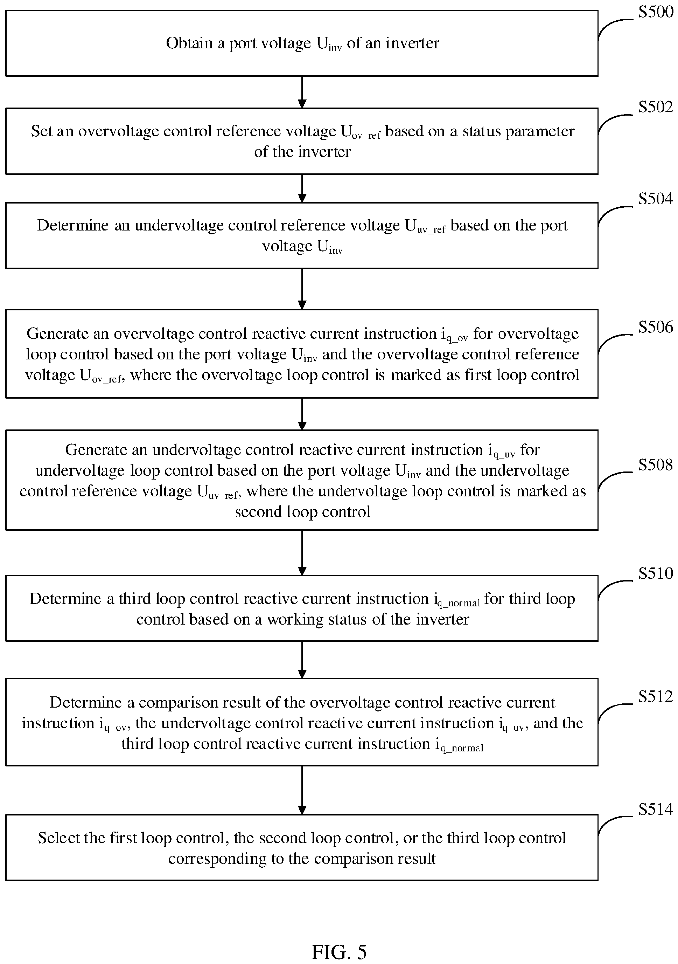

FIG. 5 is a schematic flowchart of a method for controlling a reactive current of an inverter in another implementation according to an embodiment of this application. As shown in FIG. 5, the control method includes the following steps. Step S500: Obtain a port voltage $U_{inv}$ of an inverter.

Details of step S500 are basically the same as those of step S200. Details are not described herein again.

Step S502: Set an overvoltage control reference voltage $U_{ov\_ref}$ based on a status parameter of the inverter.

Details of step S502 are basically the same as those of step S302. Details are not described herein again.

Step S504: Determine an undervoltage control reference voltage $U_{uv\_ref}$ based on the port voltage $U_{inv}$.

Details of step S504 are basically the same as those of step S204. Details are not described herein again.

Step S506: Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control.

Details of step S506 are basically the same as those of step S206. Details are not described herein again.

Step S508: Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control.

Details of step S508 are basically the same as those of step S208. Details are not described herein again.

Step S510: Determine a third loop control reactive current instruction $i_{q\_normal}$ for third loop control based on a working status of the inverter.

Details of step S510 are basically the same as those of step S210. Details are not described herein again.

Step S512: Determine a comparison result of the overvoltage control reactive current instruction $i_{q\_ov}$, the undervoltage control reactive current instruction $i_{q\_uv}$, and the third loop control reactive current instruction $i_{q\_normal}$.

Details of step S512 are basically the same as those of step S212. Details are not described herein again.

Step S514: Select the first loop control, the second loop control, or the third loop control corresponding to the comparison result.

Details of step S514 are basically the same as those of step S214. Details are not described herein again.

In some example embodiments, the inverter is a grid-tied inverter tied to a grid, and receives a power scheduling instruction of a host computer, in the grid, relative to the grid-tied inverter. In this way, the power scheduling instruction of the host computer is received, so that power scheduling is performed on the grid-tied inverter. The grid-tied inverter is used in a photovoltaic power generation system, a wind power generation system, or a hydroelectric power generation system. In this way, the grid-tied inverter is applied to a new energy power generation system, thereby avoiding a plurality of times of fault ride through triggered by the new energy power generation system and disconnection caused by a ride through failure.

The specific embodiments provided in this application may be implemented by using any one or a combination of hardware, software, firmware, or a solid-state logic circuit, and may be implemented in combination with signal processing, control, and/or a dedicated circuit. The device or apparatus provided in the specific embodiments of this application may include one or more processors (for example, microprocessors, controllers, digital signal processors (DSP), application-specific integrated circuits (ASIC), or field programmable gate arrays (FPGA)), and these processors process various computer executable instructions to control operation of the device or apparatus. The device or apparatus provided in the specific embodiments of this application may include a system bus or a data transmission system that couples components together. The system bus may include any one of different bus structures or a combination of different bus structures, such as a memory bus or a memory controller, a peripheral bus, a universal serial bus, and/or a processor or local bus that uses any one of a plurality of bus architectures. The device or apparatus provided in the specific embodiments of this application may be separately provided, may be a part of a system, or may be a part of another device or apparatus.

The specific embodiments provided in this application may include a computer readable storage medium or be combined with a computer readable storage medium, for example, one or more storage devices that can provide nontemporary data storage. The computer readable storage medium/storage device may be configured to store data, program modules, and/or instructions. When the data, the program modules, and/or the instructions are executed by the processor of the device or apparatus provided in the specific embodiments of this application, the device or apparatus is enabled to implement related operations. The computer readable storage medium/storage device may include one or more of the following features: volatile, nonvolatile, dynamic, static, readable/writable, read-only, random access, sequential access, location addressability, file addressability, and content addressability. In one or more example embodiments, the computer readable storage medium/storage device may be integrated into the device or apparatus provided in the specific embodiments of this application or belong to a common system. The computer readable storage medium/storage device may include an optical storage device, a semiconductor storage device, a magnetic storage device, and/or the like, or may include a random access memory (RAM), a flash memory, a read-only memory (ROM), an erasable programmable read-only memory (EPROM), an electrically erasable programmable read-only memory (EEPROM), a register, a hard disk, a removable magnetic disk, a recordable and/or rewritable compact disc (CD), a digital versatile disc (DVD), a mass storage medium device, or a suitable storage medium in any other form.

The foregoing describes the implementations of embodiments of this application. It should be noted that based on an actual requirement, sequence adjustment, combination, or deletion may be performed on the steps in the method described in the specific embodiments of this application. In the foregoing embodiments, the description of each embodiment has respective focuses. For a part that is not described in detail in an embodiment, refer to related descriptions in other embodiments. It may be understood that the structures shown in embodiments of this application and the accompanying drawings constitute no specific limitation on a related apparatus or system. In some other embodiments of this application, the related apparatus or system may include more or fewer components than those shown in the specific embodiments and the accompanying drawings, combine some components, split some components, or have a different component arrangement. A person skilled in the art will understand that, without departing from the spirit and scope of the specific embodiments of this application, various modifications or changes may be made to arrangements, operations, and details of the method and device described in the specific embodiments. Without departing from the principle of embodiments of this application, several improvements and modifications may be further made. These improvements and modifications are also considered as falling within the protection scope of this application.

**Claims**

1.  A method for controlling a reactive current of an inverter, wherein the method for controlling a reactive current of an inverter comprises:

    generating an overvoltage control reactive current instruction for overvoltage loop control based on a port voltage of an inverter and an overvoltage control reference voltage, wherein the overvoltage loop control is marked as first loop control, and the overvoltage loop control is controlling an output reactive current of the inverter according to the overvoltage control reactive current instruction, so that an absolute value of a difference between the port voltage and the overvoltage control reference voltage is less than a first threshold;
    generating an undervoltage control reactive current instruction for undervoltage loop control based on the port voltage and an undervoltage control reference voltage, wherein the undervoltage loop control is marked as second loop control, and the undervoltage loop control is controlling the output reactive current of the inverter according to the undervoltage control reactive current instruction, so that an absolute value of a difference between the port voltage and the undervoltage control reference voltage is less than a second threshold;
    determining a third loop control reactive current instruction for third loop control based on a working status of the inverter, wherein the third loop control is independent of the first loop control and the second loop control, and the working status comprises a fault ride through state, a fault recovery state, or a normal state;
    determining a comparison result of the overvoltage control reactive current instruction, the undervoltage control reactive current instruction, and the third loop control reactive current instruction; and
    selecting the first loop control, the second loop control, or the third loop control corresponding to the comparison result.

2.  The method for controlling a reactive current of an inverter according to claim 1, wherein when the working status is the fault ride through state, the third loop control reactive current instruction is a fault ride through reactive current instruction; when the working status is the fault recovery state, the third loop control reactive current instruction is a fault recovery reactive current instruction; or when the working status is the normal state, the third loop control reactive current instruction is a power scheduling reactive current instruction.

3.  The method for controlling a reactive current of an inverter according to claim 2, wherein the third loop control reactive current instruction is preset or determined based on an instruction received from a host computer relative to the inverter.

4.  The method for controlling a reactive current of an inverter according to claim 2, wherein the working status is determined based on the port voltage or an instruction of the host computer relative to the inverter.

5.  The method for controlling a reactive current of an inverter according to claim 1, wherein the determining a comparison result of the overvoltage control reactive current instruction, the undervoltage control reactive current instruction, and the third loop control reactive current instruction comprises:

    determining that an output current direction of the inverter is a positive reference direction;
    determining a minimum result in the undervoltage control reactive current instruction and the third loop control reactive current instruction based on the positive reference direction; and
    determining a maximum result in the minimum result and the overvoltage control reactive current instruction based on the positive reference direction, wherein the maximum result is the comparison result.

6.  The method for controlling a reactive current of an inverter according to claim 1, wherein the determining a comparison result of the overvoltage control reactive current instruction, the undervoltage control reactive current instruction, and the third loop control reactive current instruction comprises:

    determining that an output current direction of the inverter is a positive reference direction;
    determining a first maximum result in the undervoltage control reactive current instruction and the overvoltage control reactive current instruction based on the positive reference direction;
    determining a second maximum result in the third loop control reactive current instruction and the overvoltage control reactive current instruction based on the positive reference direction; and
    determining a minimum result in the first maximum result and the second maximum result based on the positive reference direction, wherein the minimum result is the comparison result.

7. The method for controlling a reactive current of an inverter according to claim 1, wherein the determining a comparison result of the overvoltage control reactive current instruction, the undervoltage control reactive current instruction, and the third loop control reactive current instruction comprises:

determining that an output current direction of the inverter is a negative reference direction;
determining a maximum result in the undervoltage control reactive current instruction and the third loop control reactive current instruction based on the negative reference direction; and
determining a minimum result in the maximum result and the overvoltage control reactive current instruction based on the negative reference direction, wherein the minimum result is the comparison result.

8. The method for controlling a reactive current of an inverter according to claim 1, wherein the determining a comparison result of the overvoltage control reactive current instruction, the undervoltage control reactive current instruction, and the third loop control reactive current instruction comprises:

determining that an output current direction of the inverter is a negative reference direction;
determining a first minimum result in the undervoltage control reactive current instruction and the overvoltage control reactive current instruction based on the negative reference direction;
determining a second minimum result in the third loop control reactive current instruction and the overvoltage control reactive current instruction based on the negative reference direction; and
determining a maximum result in the first minimum result and the second minimum result based on the negative reference direction, wherein the maximum result is the comparison result.

9. The method for controlling a reactive current of an inverter according to claim 1, wherein when the overvoltage control reference voltage is equal to the undervoltage control reference voltage, the overvoltage loop control and the undervoltage loop control are same single loop control.

10. The method for controlling a reactive current of an inverter according to any one of claims 1 to 9, wherein the determining a comparison result of the overvoltage control reactive current instruction, the undervoltage control reactive current instruction, and the third loop control reactive current instruction comprises:

determining a first weight value corresponding to the first loop control, a second weight value corresponding to the second loop control, and a third weight value corresponding to the third loop control;
calculating a weighted overvoltage control reactive current instruction based on the overvoltage control reactive current instruction and the first weight value;
calculating a weighted undervoltage control reactive current instruction based on the undervoltage control reactive current instruction and the second weight value;
calculating a weighted third loop control reactive current instruction based on the third loop control reactive current instruction and the third weight value; and
determining the comparison result based on the weighted overvoltage control reactive current instruction, the weighted undervoltage control reactive current instruction, and the weighted third loop control reactive current instruction.

11. The method for controlling a reactive current of an inverter according to claim 10, wherein the first weight value, the second weight value, and the third weight value are separately determined based on the working status of the inverter and a status of a grid to which the inverter is tied.

12. The method for controlling a reactive current of an inverter according to claim 11, wherein the first weight value, the second weight value, and the third weight value respectively have independent time parameters, and the time parameters are determined based on duration of the working status.

13. The method for controlling a reactive current of an inverter according to claim 1, wherein the method for controlling a reactive current of an inverter further comprises:
setting the overvoltage control reference voltage based on a status parameter of the inverter, wherein the status parameter comprises an average port voltage value that is of the inverter and that is obtained before the fault ride through state, a rated voltage of the inverter, output power of the inverter, an overvoltage protection point of the inverter, a power system short-circuit ratio corresponding to the inverter, or an average reactive power value that is of the inverter and that is obtained before the fault ride through state.

**14.** The method for controlling a reactive current of an inverter according to claim 1, wherein the method for controlling a reactive current of an inverter further comprises:
setting the undervoltage control reference voltage based on a status parameter of the inverter, wherein the status parameter comprises the average port voltage value that is of the inverter and that is obtained before the fault ride through state, the rated voltage of the inverter, the output power of the inverter, an undervoltage protection point of the inverter, the power system short-circuit ratio corresponding to the inverter, or the average reactive power value that is of the inverter and that is obtained before the fault ride through state.

**15.** The method for controlling a reactive current of an inverter according to claim 1, wherein the method for controlling a reactive current of an inverter further comprises:
determining the overvoltage control reference voltage based on the port voltage.

**16.** The method for controlling a reactive current of an inverter according to claim 15, wherein the determining the overvoltage control reference voltage based on the port voltage comprises:

determining an overvoltage loop control trigger threshold and an overvoltage loop control exit threshold based on a smaller value in a high voltage ride through trigger threshold and an overvoltage protection threshold of the inverter, wherein the overvoltage loop control exit threshold is not greater than the overvoltage loop control trigger threshold, the overvoltage loop control trigger threshold is not greater than the smaller value, the inverter triggers high voltage ride through when the port voltage is greater than the high voltage ride through trigger threshold, and the inverter triggers overvoltage disconnection protection when the port voltage is greater than the overvoltage protection threshold; and
when the port voltage is greater than the overvoltage loop control trigger threshold, determining a first overvoltage reference voltage as the overvoltage control reference voltage; or
when the port voltage is less than the overvoltage loop control exit threshold, determining a second overvoltage reference voltage as the overvoltage control reference voltage, wherein
the first overvoltage reference voltage is not greater than the second overvoltage reference voltage, and the second overvoltage reference voltage is not greater than the overvoltage loop control exit threshold.

**17.** The method for controlling a reactive current of an inverter according to claim 16, wherein the method for controlling a reactive current of an inverter further comprises:
separately setting the overvoltage loop control trigger threshold and the overvoltage loop control exit threshold based on a status parameter of the inverter, wherein the status parameter comprises the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

**18.** The method for controlling a reactive current of an inverter according to claim 1, wherein the method for controlling a reactive current of an inverter further comprises:
determining the undervoltage control reference voltage based on the port voltage.

**19.** The method for controlling a reactive current of an inverter according to claim 18, wherein the determining the undervoltage control reference voltage based on the port voltage comprises:

determining an undervoltage loop control trigger threshold and an undervoltage loop control exit threshold based on a larger value in a low voltage ride through trigger threshold and an undervoltage protection threshold of the inverter, wherein the undervoltage loop control exit threshold is not less than the undervoltage loop control trigger threshold, the undervoltage loop control trigger threshold is not less than the larger value, the inverter triggers low voltage ride through when the port voltage is less than the low voltage ride through trigger threshold, and the inverter triggers undervoltage disconnection protection when the port voltage is less than the undervoltage protection threshold; and
when the port voltage is less than the undervoltage loop control trigger threshold, determining a first undervoltage reference voltage as the undervoltage control reference voltage; or
when the port voltage is greater than the undervoltage loop control exit threshold, determining a second undervoltage reference voltage as the undervoltage control reference voltage, wherein
the first undervoltage reference voltage is not less than the second undervoltage reference voltage, and the second undervoltage reference voltage is not less than the undervoltage loop control exit threshold.

20. The method for controlling a reactive current of an inverter according to claim 19, wherein the method for controlling a reactive current of an inverter further comprises:
separately setting the undervoltage loop control trigger threshold and the undervoltage loop control exit threshold based on a status parameter of the inverter, wherein the status parameter comprises the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

21. The method for controlling a reactive current of an inverter according to any one of claims 1 to 9 and 13 to 20, wherein the port voltage is obtained through real-time collection.

22. An apparatus for controlling a reactive current of an inverter, wherein the apparatus for controlling a reactive current of an inverter comprises a memory and a processor, the memory stores a computer program, and the processor performs the following operations according to the computer program:

generating an overvoltage control reactive current instruction for overvoltage loop control based on a port voltage of an inverter and an overvoltage control reference voltage, wherein the overvoltage loop control is marked as first loop control, and the overvoltage loop control is controlling an output reactive current of the inverter according to the overvoltage control reactive current instruction, so that an absolute value of a difference between the port voltage and the overvoltage control reference voltage is less than a first threshold;
generating an undervoltage control reactive current instruction for undervoltage loop control based on the port voltage and an undervoltage control reference voltage, wherein the undervoltage loop control is marked as second loop control, and the undervoltage loop control is controlling the output reactive current of the inverter according to the undervoltage control reactive current instruction, so that an absolute value of a difference between the port voltage and the undervoltage control reference voltage is less than a second threshold;
determining a third loop control reactive current instruction for third loop control based on a working status of the inverter, wherein the third loop control is independent of the first loop control and the second loop control, and the working status comprises a fault ride through state, a fault recovery state, or a normal state;
determining a comparison result of the overvoltage control reactive current instruction, the undervoltage control reactive current instruction, and the third loop control reactive current instruction; and
selecting the first loop control, the second loop control, or the third loop control corresponding to the comparison result.

23. The apparatus for controlling a reactive current of an inverter according to claim 22, wherein when the working status is the fault ride through state, the third loop control reactive current instruction is a fault ride through reactive current instruction; when the working status is the fault recovery state, the third loop control reactive current instruction is a fault recovery reactive current instruction; or when the working status is the normal state, the third loop control reactive current instruction is a power scheduling reactive current instruction.

24. The apparatus for controlling a reactive current of an inverter according to claim 23, wherein the third loop control reactive current instruction is preset or determined based on an instruction received from a host computer relative to the inverter.

25. The apparatus for controlling a reactive current of an inverter according to claim 23, wherein the working status is determined based on the port voltage or an instruction of the host computer relative to the inverter.

26. The apparatus for controlling a reactive current of an inverter according to claim 22, wherein the determining a comparison result of the overvoltage control reactive current instruction, the undervoltage control reactive current instruction, and the third loop control reactive current instruction comprises:

determining that an output current direction of the inverter is a positive reference direction;
determining a minimum result in the undervoltage control reactive current instruction and the third loop control reactive current instruction based on the positive reference direction; and
determining a maximum result in the minimum result and the overvoltage control reactive current instruction based on the positive reference direction, wherein the maximum result is the comparison result.

27. The apparatus for controlling a reactive current of an inverter according to claim 22, wherein the determining a comparison result of the overvoltage control reactive current instruction, the undervoltage control reactive current instruction, and the third loop control reactive current instruction comprises:

> determining that an output current direction of the inverter is a positive reference direction;
> determining a first maximum result in the undervoltage control reactive current instruction and the overvoltage control reactive current instruction based on the positive reference direction;
> determining a second maximum result in the third loop control reactive current instruction and the overvoltage control reactive current instruction based on the positive reference direction; and
> determining a minimum result in the first maximum result and the second maximum result based on the positive reference direction, wherein the minimum result is the comparison result.

28. The apparatus for controlling a reactive current of an inverter according to claim 22, wherein the determining a comparison result of the overvoltage control reactive current instruction, the undervoltage control reactive current instruction, and the third loop control reactive current instruction comprises:

> determining that an output current direction of the inverter is a negative reference direction;
> determining a maximum result in the undervoltage control reactive current instruction and the third loop control reactive current instruction based on the negative reference direction; and
> determining a minimum result in the maximum result and the overvoltage control reactive current instruction based on the negative reference direction, wherein the minimum result is the comparison result.

29. The apparatus for controlling a reactive current of an inverter according to claim 22, wherein the determining a comparison result of the overvoltage control reactive current instruction, the undervoltage control reactive current instruction, and the third loop control reactive current instruction comprises:

> determining that an output current direction of the inverter is a negative reference direction;
> determining a first minimum result in the undervoltage control reactive current instruction and the overvoltage control reactive current instruction based on the negative reference direction;
> determining a second minimum result in the third loop control reactive current instruction and the overvoltage control reactive current instruction based on the negative reference direction; and
> determining a maximum result in the first minimum result and the second minimum result based on the negative reference direction, wherein the maximum result is the comparison result.

30. The apparatus for controlling a reactive current of an inverter according to claim 22, wherein when the overvoltage control reference voltage is equal to the undervoltage control reference voltage, the overvoltage loop control and the undervoltage loop control are same single loop control.

31. The apparatus for controlling a reactive current of an inverter according to any one of claims 22 to 30, wherein the determining a comparison result of the overvoltage control reactive current instruction, the undervoltage control reactive current instruction, and the third loop control reactive current instruction comprises:

> determining a first weight value corresponding to the first loop control, a second weight value corresponding to the second loop control, and a third weight value corresponding to the third loop control;
> calculating a weighted overvoltage control reactive current instruction based on the overvoltage control reactive current instruction and the first weight value;
> calculating a weighted undervoltage control reactive current instruction based on the undervoltage control reactive current instruction and the second weight value;
> calculating a weighted third loop control reactive current instruction based on the third loop control reactive current instruction and the third weight value; and
> determining the comparison result based on the weighted overvoltage control reactive current instruction, the weighted undervoltage control reactive current instruction, and the weighted third loop control reactive current instruction.

32. The apparatus for controlling a reactive current of an inverter according to claim 31, wherein the first weight value, the second weight value, and the third weight value are separately determined based on the working status of the inverter and a status of a grid to which the inverter is tied.

33. The apparatus for controlling a reactive current of an inverter according to claim 32, wherein the first weight value, the second weight value, and the third weight value respectively have independent time parameters, and the time parameters are determined based on duration of the working status.

34. The apparatus for controlling a reactive current of an inverter according to claim 22, wherein the processor further performs the following operation:
setting the overvoltage control reference voltage based on a status parameter of the inverter, wherein the status parameter comprises an average port voltage value that is of the inverter and that is obtained before the fault ride through state, a rated voltage of the inverter, output power of the inverter, an overvoltage protection point of the inverter, a power system short-circuit ratio corresponding to the inverter, or an average reactive power value that is of the inverter and that is obtained before the fault ride through state.

35. The apparatus for controlling a reactive current of an inverter according to claim 22, wherein the processor further performs the following operation:
setting the undervoltage control reference voltage based on a status parameter of the inverter, wherein the status parameter comprises the average port voltage value that is of the inverter and that is obtained before the fault ride through state, the rated voltage of the inverter, the output power of the inverter, an undervoltage protection point of the inverter, the power system short-circuit ratio corresponding to the inverter, or the average reactive power value that is of the inverter and that is obtained before the fault ride through state.

36. The apparatus for controlling a reactive current of an inverter according to claim 22, wherein the processor further performs the following operation:
determining the overvoltage control reference voltage based on the port voltage.

37. The apparatus for controlling a reactive current of an inverter according to claim 36, wherein the determining the overvoltage control reference voltage based on the port voltage comprises:

determining an overvoltage loop control trigger threshold and an overvoltage loop control exit threshold based on a smaller value in a high voltage ride through trigger threshold and an overvoltage protection threshold of the inverter, wherein the overvoltage loop control exit threshold is not greater than the overvoltage loop control trigger threshold, the overvoltage loop control trigger threshold is not greater than the smaller value, the inverter triggers high voltage ride through when the port voltage is greater than the high voltage ride through trigger threshold, and the inverter triggers overvoltage disconnection protection when the port voltage is greater than the overvoltage protection threshold; and
when the port voltage is greater than the overvoltage loop control trigger threshold, determining a first overvoltage reference voltage as the overvoltage control reference voltage; or
when the port voltage is less than the overvoltage loop control exit threshold, determining a second overvoltage reference voltage as the overvoltage control reference voltage, wherein
the first overvoltage reference voltage is not greater than the second overvoltage reference voltage, and the second overvoltage reference voltage is not greater than the overvoltage loop control exit threshold.

38. The apparatus for controlling a reactive current of an inverter according to claim 37, wherein the processor further performs the following operation:
separately setting the overvoltage loop control trigger threshold and the overvoltage loop control exit threshold based on a status parameter of the inverter, wherein the status parameter comprises the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

39. The apparatus for controlling a reactive current of an inverter according to claim 22, wherein the processor further performs the following operation:
determining the undervoltage control reference voltage based on the port voltage.

40. The apparatus for controlling a reactive current of an inverter according to claim 39, wherein the determining the undervoltage control reference voltage based on the port voltage comprises:

determining an undervoltage loop control trigger threshold and an undervoltage loop control exit threshold based on a larger value in a low voltage ride through trigger threshold and an undervoltage protection threshold of the inverter, wherein the undervoltage loop control exit threshold is not less than the undervoltage loop control trigger threshold, the undervoltage loop control trigger threshold is not less than the larger value, the inverter triggers low voltage ride through when the port voltage is less than the low voltage ride through trigger threshold, and the inverter triggers undervoltage disconnection protection when the port voltage is less than the undervoltage protection threshold; and

when the port voltage is less than the undervoltage loop control trigger threshold, determining a first undervoltage reference voltage as the undervoltage control reference voltage; or

when the port voltage is greater than the undervoltage loop control exit threshold, determining a second undervoltage reference voltage as the undervoltage control reference voltage, wherein

the first undervoltage reference voltage is not less than the second undervoltage reference voltage, and the second undervoltage reference voltage is not less than the undervoltage loop control exit threshold.

41. The apparatus for controlling a reactive current of an inverter according to claim 40, wherein the processor further performs the following operation:

separately setting the undervoltage loop control trigger threshold and the undervoltage loop control exit threshold based on a status parameter of the inverter, wherein the status parameter comprises the average port voltage value that is of the inverter and that is obtained before the fault ride through state, the rated voltage of the inverter, the output power of the inverter, the power system short-circuit ratio corresponding to the inverter, or the average reactive power value that is of the inverter and that is obtained before the fault ride through state.

42. A photovoltaic power generation system, wherein the photovoltaic power generation system comprises the apparatus for controlling a reactive current of an inverter according to any one of claims 22 to 41, and the apparatus for controlling a reactive current of an inverter controls a reactive current of the photovoltaic power generation system.

Photovoltaic power generation system 100

```
┌──────────────┐   ┌──────────────┐   ┌──────────────┐   ┌──────────────┐   ┌──────────────┐
│   Direct     │   │              │   │Direct current-│   │              │   │ Alternating  │
│   current    │──▶│Direct current│──▶│ alternating  │──▶│  Filter 116  │──▶│current cable │
│  input end   │   │bus capacitor │   │current inverter│  │              │   │outlet end 106│
│    104       │   │     114      │   │  circuit 102 │   │              │   │              │
└──────────────┘   └──────────────┘   └──────────────┘   └──────────────┘   └──────────────┘
                                              ▲
                                       ┌──────────────┐
                                       │ Drive signal │
                                       │generator 112 │
                                       └──────────────┘
                                              ▲
                                       ┌──────────────┐
                                       │Reactive current│
                                       │   control    │
                                       │apparatus 110 │
                                       └──────────────┘
                                              ▲
                                       ┌──────────────┐
                                       │Data collector│
                                       │    108       │
                                       └──────────────┘
```

FIG. 1

Obtain a port voltage $U_{inv}$ of an inverter $\quad$ S200

Determine an overvoltage control reference voltage $U_{ov\_ref}$ based on the port voltage $U_{inv}$ $\quad$ S202

Determine an undervoltage control reference voltage $U_{uv\_ref}$ based on the port voltage $U_{inv}$ $\quad$ S204

Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control $\quad$ S206

Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control $\quad$ S208

Determine a third loop control reactive current instruction $i_{q\_normal}$ for third loop control based on a working status of the inverter $\quad$ S210

Determine a comparison result of the overvoltage control reactive current instruction $i_{q\_ov}$, the undervoltage control reactive current instruction $i_{q\_uv}$, and the third loop control reactive current instruction $i_{q\_normal}$ $\quad$ S212

Select the first loop control, the second loop control, or the third loop control corresponding to the comparison result $\quad$ S214

FIG. 2

Obtain a port voltage $U_{inv}$ of an inverter — S300

Set an overvoltage control reference voltage $U_{ov\_ref}$ based on a status parameter of the inverter — S302

Set an undervoltage control reference voltage $U_{uv\_ref}$ based on a status parameter of the inverter — S304

Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control — S306

Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control — S308

Determine a third loop control reactive current instruction $i_{q\_normal}$ for third loop control based on a working status of the inverter — S310

Determine a comparison result of the overvoltage control reactive current instruction $i_{q\_ov}$, the undervoltage control reactive current instruction $i_{q\_uv}$, and the third loop control reactive current instruction $i_{q\_normal}$ — S312

Select the first loop control, the second loop control, or the third loop control corresponding to the comparison result — S314

FIG. 3

| | |
|---|---|
| Obtain a port voltage $U_{inv}$ of an inverter | S400 |
| Determine an overvoltage control reference voltage $U_{ov\_ref}$ based on the port voltage $U_{inv}$ | S402 |
| Set an undervoltage control reference voltage $U_{uv\_ref}$ based on a status parameter of the inverter | S404 |
| Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control | S406 |
| Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control | S408 |
| Determine a third loop control reactive current instruction $i_{q\_normal}$ for third loop control based on a working status of the inverter | S410 |
| Determine a comparison result of the overvoltage control reactive current instruction $i_{q\_ov}$, the undervoltage control reactive current instruction $i_{q\_uv}$, and the third loop control reactive current instruction $i_{q\_normal}$ | S412 |
| Select the first loop control, the second loop control, or the third loop control corresponding to the comparison result | S414 |

FIG. 4

Obtain a port voltage $U_{inv}$ of an inverter — S500

Set an overvoltage control reference voltage $U_{ov\_ref}$ based on a status parameter of the inverter — S502

Determine an undervoltage control reference voltage $U_{uv\_ref}$ based on the port voltage $U_{inv}$ — S504

Generate an overvoltage control reactive current instruction $i_{q\_ov}$ for overvoltage loop control based on the port voltage $U_{inv}$ and the overvoltage control reference voltage $U_{ov\_ref}$, where the overvoltage loop control is marked as first loop control — S506

Generate an undervoltage control reactive current instruction $i_{q\_uv}$ for undervoltage loop control based on the port voltage $U_{inv}$ and the undervoltage control reference voltage $U_{uv\_ref}$, where the undervoltage loop control is marked as second loop control — S508

Determine a third loop control reactive current instruction $i_{q\_normal}$ for third loop control based on a working status of the inverter — S510

Determine a comparison result of the overvoltage control reactive current instruction $i_{q\_ov}$, the undervoltage control reactive current instruction $i_{q\_uv}$, and the third loop control reactive current instruction $i_{q\_normal}$ — S512

Select the first loop control, the second loop control, or the third loop control corresponding to the comparison result — S514

FIG. 5

## INTERNATIONAL SEARCH REPORT

| International application No. |
|---|
| **PCT/CN2020/101741** |

| **A.** | **CLASSIFICATION OF SUBJECT MATTER** |
|---|---|

H02J 3/16(2006.01)i

According to International Patent Classification (IPC) or to both national classification and IPC

| **B.** | **FIELDS SEARCHED** |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 逆变器, 无功, 电流, 控制, 过压, 过电压, 欠压, 欠电压, 环路, 闭环, 故障, 常规; inverter, reactive, power, current, control, overvoltage, over voltage, undervoltage, under voltage, loop, fault, normal

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 105119297 A (GUANGDONG MINGYANG LONGYUAN POWER ELECTRONICS CO., LTD.) 02 December 2015 (2015-12-02) description, paragraphs 0006-0021, figures 1-8 | 1-42 |
| A | CN 108336743 A (ELECTRIC POWER RESEARCH INSTITUTE, STATE GRID SHAANXI ELECTRIC POWER CO., LTD. et al.) 27 July 2018 (2018-07-27) entire document | 1-42 |
| A | CN 110048455 A (HUNAN UNIVERSITY) 23 July 2019 (2019-07-23) entire document | 1-42 |
| A | CN 105790295 A (TBEA XINJIANG NEW ENERGY CO., LTD. et al.) 20 July 2016 (2016-07-20) entire document | 1-42 |
| A | US 2013293021 A1 (VARMA RAJIV KUMAR et al.) 07 November 2013 (2013-11-07) entire document | 1-42 |
| A | US 2019181639 A1 (INVENTUS HOLDINGS LLC) 13 June 2019 (2019-06-13) entire document | 1-42 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2021** | **16 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2020/101741** |

| Patent document cited in search report | | | Publication date (day/month/year) | Patent family member(s) | | | Publication date (day/month/year) |
|---|---|---|---|---|---|---|---|
| CN | 105119297 | A | 02 December 2015 | None | | | |
| CN | 108336743 | A | 27 July 2018 | CN | 108336743 | B | 31 January 2020 |
| CN | 110048455 | A | 23 July 2019 | None | | | |
| CN | 105790295 | A | 20 July 2016 | CN | 105790295 | B | 26 June 2018 |
| US | 2013293021 | A1 | 07 November 2013 | WO | 2013163760 | A1 | 07 November 2013 |
| US | 2019181639 | A1 | 13 June 2019 | US | 10411469 | B2 | 10 September 2019 |

Form PCT/ISA/210 (patent family annex) (January 2015)